(19)

Europäisches Patentamt
European Patent Office
Office européen des brevets

(11) **EP 4 485 934 A1**

(12) **EUROPEAN PATENT APPLICATION**
published in accordance with Art. 153(4) EPC

(43) Date of publication:
 **01.01.2025 Bulletin 2025/01**

(21) Application number: **23760262.8**

(22) Date of filing: **27.01.2023**

(51) International Patent Classification (IPC):
 *H04N 19/54* (2014.01)   *H04N 19/583* (2014.01)
 *H04N 19/597* (2014.01)   *H04N 19/132* (2014.01)
 *H04N 19/70* (2014.01)   *H04N 19/184* (2014.01)

(52) Cooperative Patent Classification (CPC):
 H04N 19/132; H04N 19/184; H04N 19/54;
 H04N 19/583; H04N 19/597; H04N 19/70

(86) International application number:
 **PCT/KR2023/001238**

(87) International publication number:
 **WO 2023/163387 (31.08.2023 Gazette 2023/35)**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **KH MA MD TN**

(30) Priority: **24.02.2022 KR 20220024115**

(71) Applicant: **LG Electronics Inc.**
 **Yeongdeungpo-gu**
 **Seoul 07336 (KR)**

(72) Inventors:
 • **LEE, Sooyeon**
  **Seoul 06772 (KR)**
 • **HUR, Hyejung**
  **Seoul 06772 (KR)**

(74) Representative: **Frenkel, Matthias Alexander**
 **Wuesthoff & Wuesthoff**
 **Patentanwälte und Rechtsanwalt PartG mbB**
 **Schweigerstraße 2**
 **81541 München (DE)**

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57)   A point cloud data transmission method according to embodiments may comprise the steps of: encoding point cloud data including points; and transmitting the encoded point cloud data and signaling information, wherein the step of encoding of the point cloud data may comprise the steps of: dividing the point cloud data into a plurality of units; selecting one or more core points from each of the divided units; generating one or more core mapping lists by using the selected one or more core points; and performing inter-prediction and compression of the point cloud data on the basis of the one or more core mapping lists.

FIG. 17

EP 4 485 934 A1

**Description**

[Technical Field]

Embodiments relate to a method and apparatus for processing point cloud content.

[Background Art]

Point cloud content is content represented by a point cloud, which is a set of points belonging to a coordinate system representing a three-dimensional space (or volume). The point cloud content may express media configured in three dimensions, and is used to provide various services such as virtual reality (VR), augmented reality (AR), mixed reality (MR), XR (Extended Reality), and self-driving services. However, tens of thousands to hundreds of thousands of point data are required to represent point cloud content. Therefore, there is a need for a method for efficiently processing a large amount of point data.

[Disclosure]

[Technical Problem]

An object of the present disclosure devised to solve the above-described problems is to provide a point cloud data transmission device, a point cloud data transmission method, a point cloud data reception device, and a point cloud data reception method for efficiently transmitting and receiving a point cloud.
Another object of the present disclosure is to provide a point cloud data transmission device, a point cloud data transmission method, a point cloud data reception device, and a point cloud data reception method for addressing latency and encoding/decoding complexity.
Another object of the present disclosure is to provide a point cloud data transmission device, a point cloud data transmission method, a point cloud data reception device, and a point cloud data reception method for efficiently transmitting and receiving a geometry-point cloud compression (G-PCC) bitstream.
Another object of the present disclosure is to provide a point cloud data transmission device, a point cloud data transmission method, a point cloud data reception device, and a point cloud data reception method for efficiently compressing point cloud data by applying a prediction-based coding method for transmission and reception of compressed point cloud data.
Another object of the present disclosure is to provide a point cloud data transmission device, a point cloud data transmission method, a point cloud data reception device, and a point cloud data reception method for increasing compression efficiency of point cloud data having one or more frames by applying inter-frame prediction in compressing point cloud data based on a predictive tree structure.
Embodiments are not limited to the above-described objects, and the scope of the embodiments may be extended to other objects that can be inferred by those skilled in the art based on the entire contents of the present disclosure.

[Technical Solution]

To achieve these objects and other advantages and in accordance with the purpose of the disclosure, as embodied and broadly described herein, a method of transmitting point cloud data may include encoding point cloud data including points, and transmitting the encoded point cloud data and signaling information.
The encoding of the point cloud data may include partitioning the point cloud data into a plurality of units, selecting one or more core points in each of the partitioned units, generating one or more core mapping lists based on the selected one or more core points, and inter-predicting and compressing the point cloud data based on the one or more core mapping lists.
The point cloud data may be frame-by-frame point cloud data or slice-by-slice point cloud data.
The point cloud data may be partitioned based on at least one of a laser ID, an azimuth, or a radius.
A number of the one or more core points in each of the partitioned units may depends on a ratio of a number of points included in each of the partitioned units to a total number of points included in the point cloud data.
The signaling information may include geometry compression-related information, wherein the geometry compression-related information may include at least one of information indicating whether the point cloud data is partitioned, information indicating a method for the partitioning, information indicating a number of partitioned regions, or information indicating a number of core mapping lists.
According to embodiments, a device for transmitting point cloud data may include an encoder configured to encode point cloud data including points, and a transmitter configured to transmit the encoded point cloud data and signaling information.

The encoder may include a partitioner configured to partition the point cloud data into a plurality of units, a core point selector configured to select one or more core points in each of the partitioned units, a core point list generator configured to generate one or more core mapping lists based on the selected one or more core points, and a predictor configured to inter-predict and compress the point cloud data based on the one or more core mapping lists.

The point cloud data may be frame-by-frame point cloud data or slice-by-slice point cloud data.

The point cloud data may be partitioned based on at least one of a laser ID, an azimuth, or a radius.

A number of the one or more core points in each of the partitioned unit may depend on a ratio of a number of points included in each of the partitioned units to a total number of points included in the point cloud data.

The signaling information may include geometry compression-related information, wherein the geometry compression-related information may include at least one of information indicating whether the point cloud data is partitioned, information indicating a method for the partitioning, information indicating a number of partitioned regions, or information indicating a number of core mapping lists.

According to embodiments, a method of receiving point cloud data may include receiving point cloud data and signaling information, decoding the point cloud data based on the signaling information, and rendering points included in the decoded point cloud data.

The decoding of the point cloud data may include partitioning the received point cloud data into a plurality of units based on the signaling information, generating one or more core mapping lists for each of the partitioned units based on the signaling information, and inter-predicting and decompressing the point cloud data based on the signaling information and the one or more core mapping lists.

The point cloud data may be frame-by-frame point cloud data or slice-by-slice point cloud data.

The point cloud data may be partitioned based on at least one of a laser ID, an azimuth, or a radius.

The signaling information may include geometry compression-related information, wherein the geometry compression-related information may include at least one of information indicating whether the point cloud data is partitioned, information indicating a method for the partitioning, information indicating a number of partitioned regions, or information indicating a number of core mapping lists.

The geometry compression-related information may be contained in at least one of a sequence parameter set, a geometry parameter set, or a geometry slice header.

[Advantageous Effects]

A point cloud data transmission method, a point cloud data transmission device, a point cloud data reception method, and a point cloud data reception device according to embodiments may provide a good-quality point cloud service.

A point cloud data transmission method, a point cloud data transmission device, a point cloud data reception method, and a point cloud data reception device according to embodiments may achieve various video codec methods.

A point cloud data transmission method, a point cloud data transmission device, a point cloud data reception method, and a point cloud data reception device according to embodiments may provide universal point cloud content such as a self-driving service (or an autonomous driving service).

A point cloud data transmission method, a point cloud data transmission device, a point cloud data reception method, and a point cloud data reception device according to embodiments may perform space-adaptive partition of point cloud data for independent encoding and decoding of the point cloud data, thereby improving parallel processing and providing scalability.

A point cloud data transmission method, a point cloud data transmission device, a point cloud data reception method, and a point cloud data reception device according to embodiments may perform encoding and decoding by partitioning the point cloud data in units of tiles and/or slices, and signal necessary data therefore, thereby improving encoding and decoding performance of the point cloud.

A point cloud data transmission method, a point cloud data transmission device, a point cloud data reception method, and a point cloud data reception device according to embodiments may effectively compress point cloud data having one or more frames by allowing duplicate information in configuring a mapping point list for inter-frame prediction.

A point cloud data transmission method, a point cloud data transmission device, a point cloud data reception method, and a point cloud data reception device according to embodiments may increase the compression efficiency of point cloud data having one or more frames by allowing duplicate information in configuring a mapping point list for predicting each node in a predictive tree geometry information to apply an inter-frame prediction technique.

A point cloud data transmission method, a point cloud data transmission device, a point cloud data reception method, and a point cloud data reception device according to embodiments may efficiently perform inter-frame prediction of predicted geometry by partitioning a point cloud frame or slice into a plurality of partitioned units and generating a mapping point list from each partitioned unit.

A point cloud data transmission method, a point cloud data transmission device, a point cloud data reception method, and a point cloud data reception device according to embodiments may increase the accuracy of configuration of a mapping point list by adjusting the number of core points according to a distribution of points through position adaptive sampling.

A point cloud data transmission method, a point cloud data transmission device, a point cloud data reception method, and a point cloud data reception device according to embodiments may allow some element information about core points to be duplicated and included in a mapping point list for prediction using a technique for inter-frame prediction of point cloud content, thereby reducing residual information, improving accuracy, and reducing the size of a transmitted bitstream.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure.

FIG. 1 illustrates an exemplary point cloud content providing system according to embodiments.
FIG. 2 is a block diagram illustrating a point cloud content providing operation according to embodiments.
FIG. 3 illustrates an exemplary process of capturing a point cloud video according to embodiments.
FIG. 4 illustrates an exemplary block diagram of point cloud video encoder according to embodiments.
FIG. 5 illustrates an example of voxels in a 3D space according to embodiments.
FIG. 6 illustrates an example of octree and occupancy code according to embodiments.
FIG. 7 illustrates an example of a neighbor node pattern according to embodiments.
FIG. 8 illustrates an example of point configuration of a point cloud content for each LOD according to embodiments.
FIG. 9 illustrates an example of point configuration of a point cloud content for each LOD according to embodiments.
FIG. 10 illustrates an example of a block diagram of a point cloud video decoder according to embodiments.
FIG. 11 illustrates an example of a point cloud video decoder according to embodiments.
FIG. 12 illustrates a configuration for point cloud video encoding of a transmission device according to embodiments.
FIG. 13 illustrates a configuration for point cloud video decoding of a reception device according to embodiments.
FIG. 14 illustrates an exemplary structure operatively connectable with a method/device for transmitting and receiving point cloud data according to embodiments.
FIG. 15 illustrates an example of performing inter-frame prediction in a predictive tree structure according to embodiments.
FIG. 16 illustrates another example of a point cloud transmission device according to embodiments.
FIG. 17 is a block diagram illustrating a process of configuring a mapping point list and performing inter-prediction according to a first embodiment.
FIG. 18 is a block diagram illustrating a process of configuring a mapping point list and performing inter-prediction according to a second embodiment.
FIG. 19 illustrates an example of a core point selection method according to embodiments.
FIG. 20 is a flowchart illustrating an example method of encoding geometry information according to embodiments.
FIG. 21 illustrates an example bitstream structure of point cloud data for transmission/reception according to embodiments.
FIG. 22 illustrates an example syntax structure of a sequence parameter set according to embodiments.
FIG. 23 illustrates one embodiment of a syntax structure of a geometry parameter set according to embodiments.
FIG. 24 illustrates example partitioning modes indicating a method of partitioning point cloud data according to embodiments.
FIG. 25 illustrates an example syntax structure of a geometry slice header according to embodiments.
FIG. 26 illustrates another example of a point cloud reception device according to embodiments.
FIG. 27 illustrates an example geometry decoding operation of a point cloud reception device according to embodiments.
FIG. 28 is a flowchart of a method of transmitting point cloud data according to embodiments.
FIG. 29 is a flowchart of a method of receiving point cloud data according to embodiments.

[Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. It should be noted that the following examples are only for embodying the present disclosure and do not limit the scope of the present disclosure. What can be easily inferred by an expert in the technical field to which the present disclosure belongs from the detailed description and examples of the present disclosure is to be interpreted as being within the scope of the present disclosure.

The detailed description in this present specification should be construed in all aspects as illustrative and not restrictive. The scope of the disclosure should be determined by the appended claims and their legal equivalents, and all changes coming within the meaning and equivalency range of the appended claims are intended to be embraced therein.

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details. Although most terms used in this specification have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings. In addition, the following drawings and detailed description should not be construed as being limited to the specifically described embodiments, but should be construed as including equivalents or substitutes of the embodiments described in the drawings and detailed description.

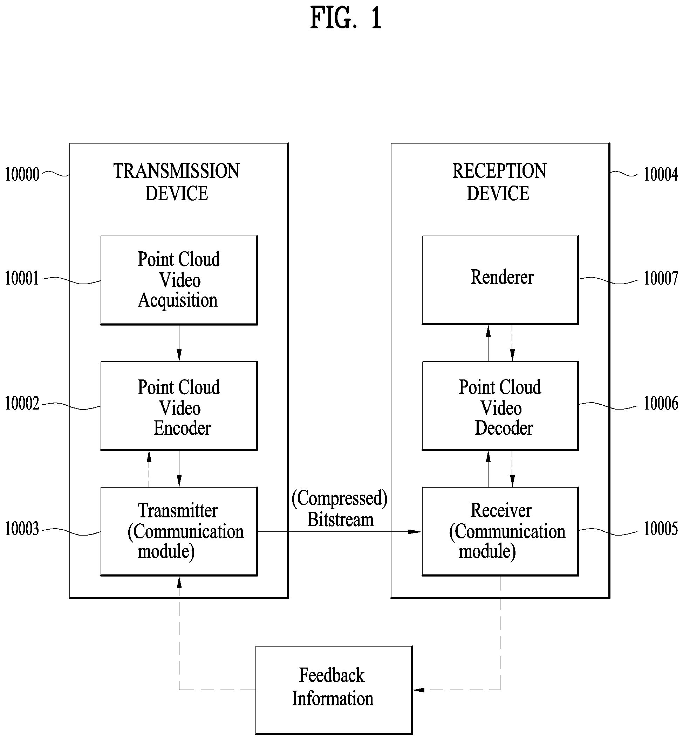

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquisition unit 10001, a point cloud video encoder 10002, and/or a transmitter (or communication module) 10003.

The point cloud video acquisition unit 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component or module) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like).

The dotted lines in FIG. 1 represent a process of transmitting the feedback information secured by the renderer 10007. The point cloud content providing system may process (encode/decode) point cloud data based on the feedback information. Accordingly, the point cloud video decoder 10006 may perform a decoding operation based on the feedback information. The reception device 10004 may transmit the feedback information to the transmission device 10000. The transmission device 10000 (or the point cloud video encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmitting device, a transmitter, a transmission system, or the like, and the reception device 10004 may be called a decoder, a receiving device, a receiver, a reception system, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

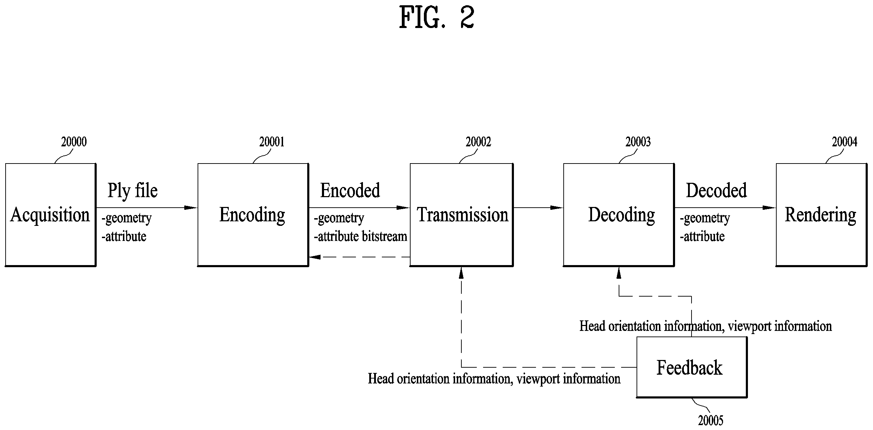

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquisition unit 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or may have two attributes that are color and reflectance. According to embodiments, the geometry may be called positions, geometry information, geometry data, or the like, and the attribute may be called attributes, attribute information, attribute data, or the like. The point cloud content providing system (e.g., the point cloud transmission device 10000 or the point cloud video acquisition unit 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

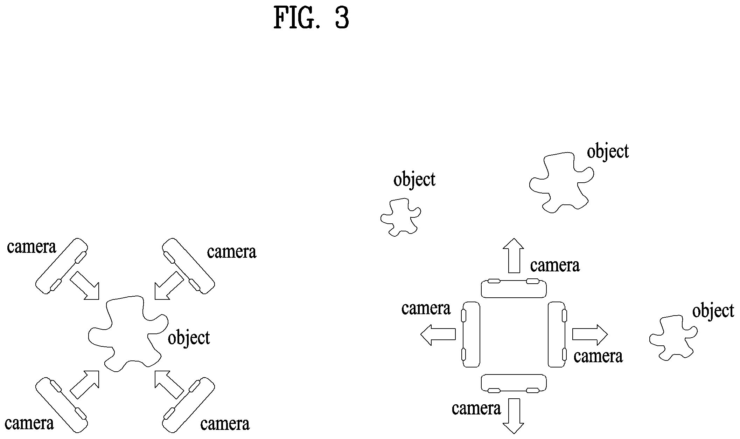

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in FIG. 3, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (e.g., a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

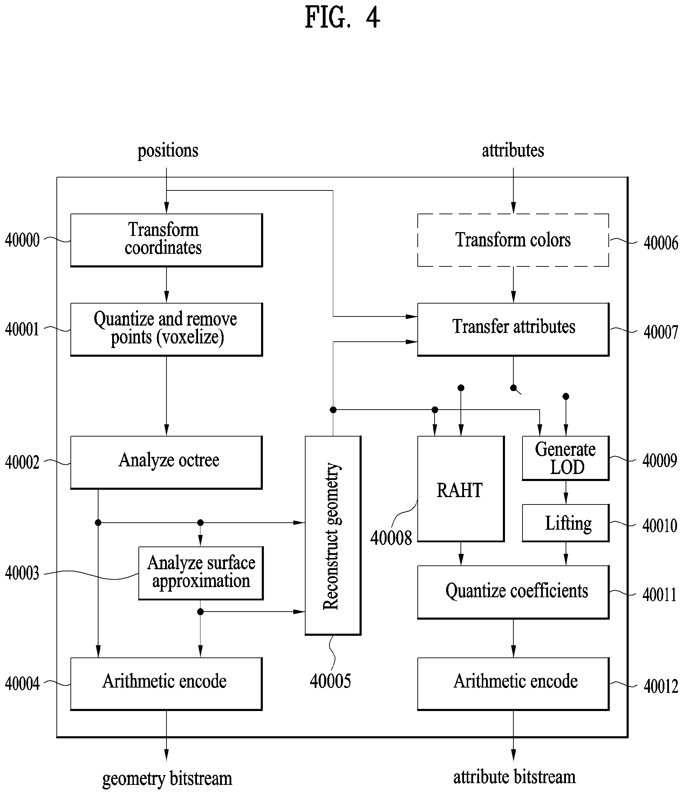

FIG. 4 illustrates an exemplary point cloud video encoder according to embodiments.

FIG. 4 shows an example of the point cloud video encoder 10002 of FIG. 1. The point cloud video encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 to 2, the point cloud video encoder may perform geometry encoding and attribute encoding. The geometry encoding is performed before the attribute encoding.

The point cloud video encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometry reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 40001 according to the embodiments quantizes the geometry information. For example, the quantizer 40001 may quantize the points based on a minimum position value of all points (e.g., a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. The voxelization means a minimum unit representing position information in 3D space. Points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center point of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD). The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud video encoder of FIG. 4 may be implemented by hardware including one or more processors or integrated circuits configured to communicate with one or more memories included in the point cloud content providing apparatus, software, firmware, or a combination thereof. The one or more processors may perform at least one of the operations and/or functions of the elements of the point cloud video encoder of FIG. 4 described above. Additionally, the one or more processors may operate or execute a set of software programs and/or instructions for performing the operations and/or functions of the elements of the point cloud video encoder of FIG. 4. The one or more memories according to the embodiments may include a high speed random access memory, or include a non-volatile memory (e.g., one or more magnetic disk storage devices, flash memory devices, or other non-volatile solid-state memory devices).

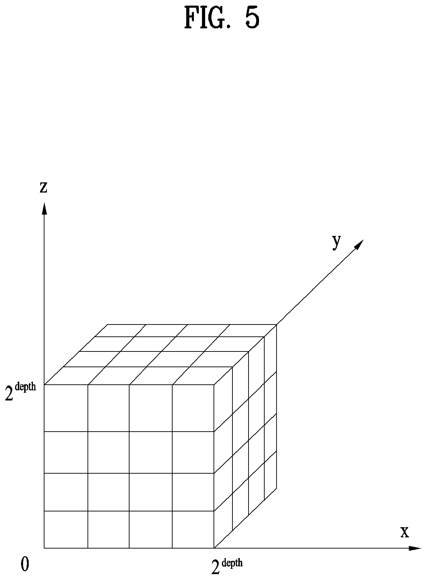

FIG. 5 shows an example of voxels according to embodiments.

FIG.5 shows voxels positioned in a 3D space represented by a coordinate system composed of three axes, which are the X-axis, the Y-axis, and the Z-axis. As described with reference to FIG. 4, the point cloud video encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and $(2^d, 2^d, 2^d)$ is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

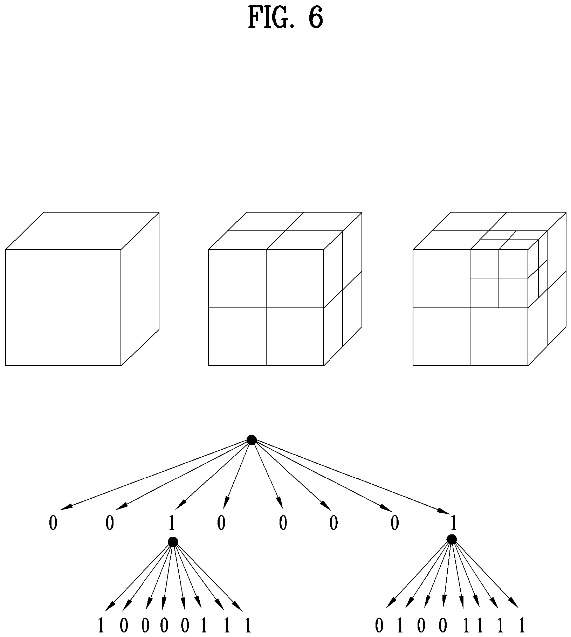

FIG. 6 shows an example of an octree and occupancy code according to embodiments.

As described with reference to FIGS. 1 to 4, the point cloud content providing system (point cloud video encoder 10002) or the octree analyzer 40002 of the point cloud video encoder performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles $(0, 0, 0)$ and $(2^d, 2^d, 2^d)$. Here, $2^d$ may be set to a value constituting the smallest bounding box surrounding all points of the point cloud content (or point cloud video). Here, d denotes the depth of the octree. The value of d is determined in Equation 1. In Equation 1, $(x^{int}_n, y^{int}_n, z^{int}_n)$ denotes the positions (or position values) of quantized points.

Equation 1

$$d = Ceil\left(Log2\left(Max\left(x^{int}_n, y^{int}_n, z^{int}_n, n = 1, ..., N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud video encoder (e.g., the arithmetic encoder 40004) according to the embodiments may perform entropy encoding on the occupancy codes. In order to increase the compression efficiency, the point cloud video encoder may perform intra/inter-coding on the occupancy codes. The reception device (e.g., the reception device 10004 or the point cloud video decoder 10006) according to the embodiments reconstructs the octree based on the occupancy codes.

The point cloud video encoder (e.g., the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud video encoder according to the embodiments may skip voxelization and perform direct coding to directly code the positions of points included in the specific region. The coordinates of a direct coding point according to the embodiments are referred to as direct coding mode (DCM). The point cloud video encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud video decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud video encoder (or the arithmetic encoder 40004) according to the embodiments may perform entropy coding on the positions (or position values) of the points.

The point cloud video encoder (e.g., the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud video encoder according to the embodiments may specify a level at which trisoup geometry encoding is to be applied. For example, when the specific level is equal to the depth of the octree, the point cloud video encoder does not operate in the trisoup mode. In other words, the point cloud video encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud video encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud video encoder according to the embodiments (e.g., the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed according to Equation 2 by: i) calculating the centroid value of each vertex, ii) subtracting the center value from each vertex value, and iii) estimating the sum of the squares of the values obtained by the subtraction.

## Equation 2

$$
① \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix} \quad ② \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad ③ \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}
$$

Then, the minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table 1 below shows a combination of vertices for creating a triangle according to the number of the vertices. The vertices are ordered from 1 to n. The table 1 below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

[Table 1] Triangles formed from vertices ordered 1,...,n

| | [Table 1] |
|---|---|
| *n* | **Triangles** |
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 1 0 | (1,2,3), (3,4,5), (5,6,7), (7,8,9), (9,10,1), (1,3,5), (5,7,9), (9,1,5) |
| 1 1 | (1,2,3), (3,4,5), (5,6,7), (7,8,9), (9,10,11), (11,1,3), (3,5,7), (7,9,11), (11,3,7) |
| 1 2 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud video encoder according to the embodiments may voxelize the refined vertices. In addition, the point cloud video encoder may perform attribute encoding based on the voxelized positions (or position values).

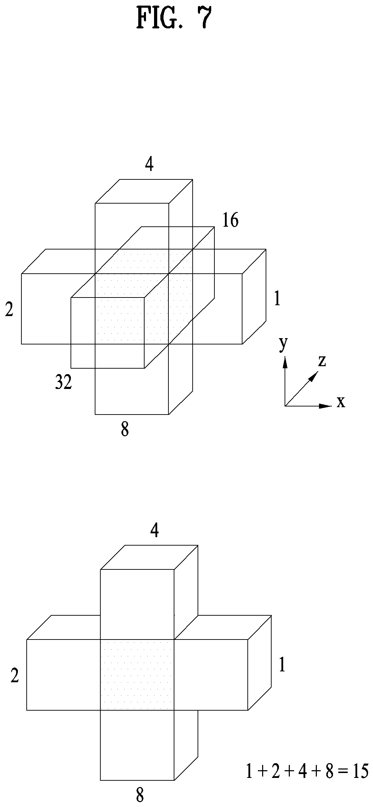

FIG. 7 shows an example of a neighbor node pattern according to embodiments.

In order to increase the compression efficiency of the point cloud video, the point cloud video encoder according to the embodiments may perform entropy coding based on context adaptive arithmetic coding.

As described with reference to FIGS. 1 to 6, the point cloud content providing system or the point cloud video encoder 10002 of FIG. 1, or the point cloud video encoder or arithmetic encoder 40004 of FIG. 4 may perform entropy coding on the occupancy code immediately. In addition, the point cloud content providing system or the point cloud video encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud video encoder according to the embodiments determines occupancy of neighbor nodes of each node of the octree and obtains a value of a neighbor pattern. The neighbor node pattern is used to infer the occupancy pattern of the node. The upper part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The lower part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud video encoder may perform coding according to the neighbor node pattern value (for example, when the neighbor node pattern value is 63, 64 kinds of coding may be performed). According to embodiments, the point cloud video encoder may reduce coding complexity by changing a neighbor node pattern value (for example, based on a table by which 64 is changed to 10 or 6).

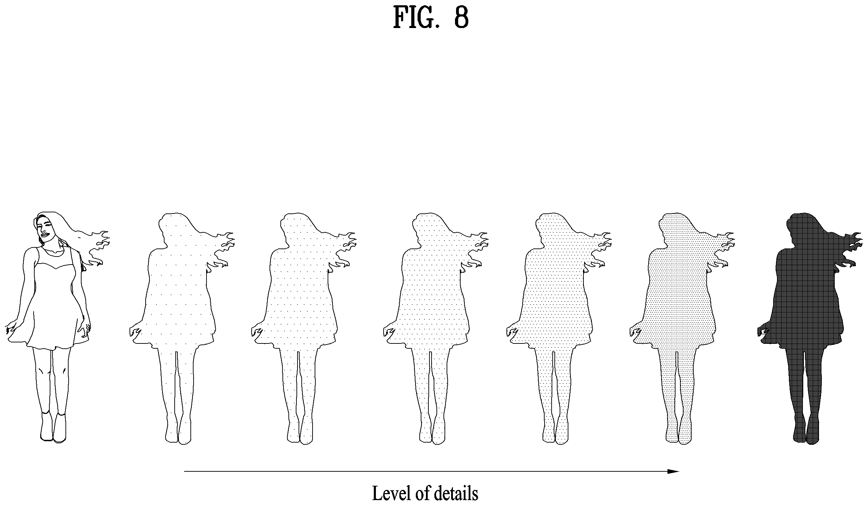

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud video encoder (e.g., the LOD generator 40009) may classify (reorganize or group) points by LOD. FIG. 8 shows the point cloud content corresponding to LODs. The leftmost picture in FIG. 8 represents original point cloud content. The second picture from the left of FIG. 8 represents distribution of the points in the lowest LOD, and the rightmost picture in FIG. 8 represents distribution of the points in the highest LOD. That is, the points in the lowest LOD are sparsely distributed, and the points in the highest LOD are densely distributed. That is, as the LOD rises in the direction pointed by the arrow indicated at the bottom of FIG. 8, the space (or distance) between points is narrowed.

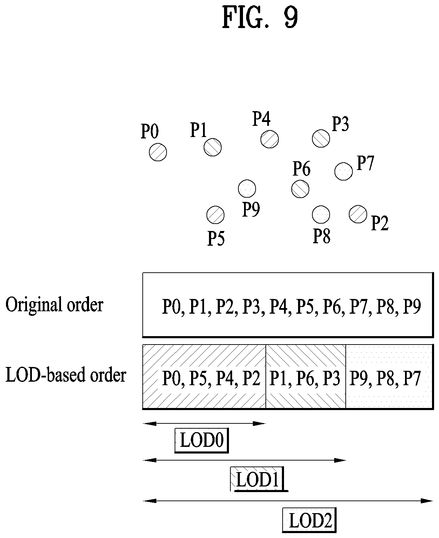

FIG. 9 illustrates an example of point configuration for each LOD according to embodiments.

As described with reference to FIGS. 1 to 8, the point cloud content providing system, or the point cloud video encoder (e.g., the point cloud video encoder 10002 of FIG. 1, the point cloud video encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud video encoder, but also by the point cloud video decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud video encoder according to the embodiments may perform prediction transform coding based on LOD, lifting transform coding based on LOD, and RAHT transform coding selectively or in combination.

The point cloud video encoder according to the embodiments may generate a predictor for points to perform prediction transform coding based on LOD for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud video encoder according to the embodiments (e.g., the coefficient quantizer 40011) may quantize and inversely quantize the residual of each point (which may be called residual attribute, residual attribute value, attribute prediction residual value or prediction error attribute value and so on) obtained by subtracting a predicted attribute (or attribute value) each point from the attribute (i.e., original attribute value) of each point. The quantization process performed for a residual attribute value in a transmission device is configured as shown in table 2. The inverse quantization process performed for a residual attribute value in a reception device is configured as shown in table 3.

[Table 2]

| int PCCQuantization(int value, int quantStep) { |
| --- |
| if( value >=0) { |
| return floor(value / quantStep + 1.0 / 3.0); |
| } else { |
| return -floor(-value / quantStep + 1.0 / 3.0); |
| } |
| } |

[Table 3]

| int PCCInverseQuantization(int value, int quantStep) { |
| --- |
| if( quantStep ==0) { |
| return value; |
| } else { |
| return value * quantStep; |
| } |
| } |

When the predictor of each point has neighbor points, the point cloud video encoder (e.g., the arithmetic encoder 40012) according to the embodiments may perform entropy coding on the quantized and inversely quantized residual attribute values as described above. When the predictor of each point has no neighbor point, the point cloud video encoder according to the embodiments (e.g., the arithmetic encoder 40012) may perform entropy coding on the attributes of the corresponding point without performing the above-described operation.

The point cloud video encoder according to the embodiments (e.g., the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud video encoder (e.g., coefficient quantizer 40011) according to the embodiments quantizes the predicted attribute values. In addition, the point cloud video encoder (e.g., the arithmetic encoder 40012) performs entropy coding on the quantized attribute values.

The point cloud video encoder (e.g., the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud video encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

Equation 3 below represents a RAHT transformation matrix. In Equation 3, $g_{l\,x,y,z}$ denotes the average attribute value of voxels at level $l$. $g_{l\,x,y,z}$ may be calculated based on $g_{l+1\,2x,y,z}$ and $g_{l+1\,2x+1,y,z}$. The weights for $g_{l\,2x,y,z}$ and $g_{l\,2x+1,y,z}$ are w1 = $w_{l\,2x,y,z}$ and w2 = $w_{l\,2x+1,y,z}$.

### Equation 3

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix} \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\,x,y,z}$ is a low-pass value and is used in the merging process at the next higher level. $h_{l-1\,x,y,z}$ denotes high-pass coefficients. The high-pass coefficients at each step are quantized and subjected to entropy coding (e.g., encoding by the arithmetic encoder 40012). The weights are calculated as $w_{l-1\,x,y,z} = w_{l\,2x,y,z} + w_{l\,2x,y,z}$. The root node is created through the $g_{1\,0,0,0}$ and $g_{1\,0,0,1}$ as Equation 4.

### Equation 4

$$\begin{bmatrix} gDC \\ h_{0_{0,0,0}} \end{bmatrix} = T_{w1000\,w1001} \begin{bmatrix} g_{1\,0,0,0z} \\ g_{1_{0,0,1}} \end{bmatrix}$$

The value of gDC is also quantized and subjected to entropy coding like the high-pass coefficients.

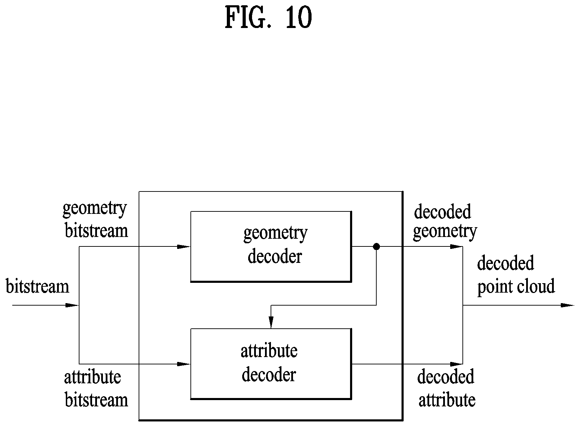

FIG. 10 illustrates a point cloud video decoder according to embodiments.

The point cloud video decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud video decoder may receive a geometry bitstream and an attribute bitstream contained in one or more bitstreams. The point cloud video decoder includes a geometry decoder and an attribute decoder. The geometry decoder performs geometry decoding on the geometry bitstream and outputs decoded geometry. The attribute decoder performs attribute decoding on the attribute bitstream based on the decoded geometry, and outputs decoded attributes. The decoded geometry and decoded attributes are used to reconstruct point cloud content (a decoded point cloud).

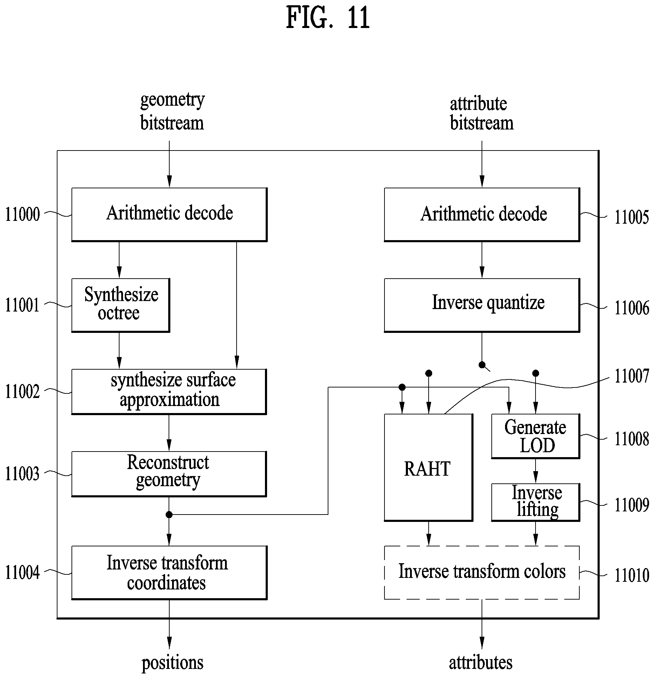

FIG. 11 illustrates a point cloud video decoder according to embodiments.

The point cloud video decoder illustrated in FIG. 11 is an example of the point cloud video decoder illustrated in FIG. 10, and may perform a decoding operation, which is a reverse process to the encoding operation of the point cloud video encoder illustrated in FIGS. 1 to 9.

As described with reference to FIGS. 1 and 10, the point cloud video decoder may perform geometry decoding and attribute decoding. The geometry decoding is performed before the attribute decoding.

The point cloud video decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct decoding and trisoup geometry decoding. The direct decoding and trisoup geometry decoding are selectively applied. The geometry decoding is not limited to the above-described example, and is performed as a reverse process to the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the reverse process to the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud video encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud video encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud video encoder.

Although not shown in the figure, the elements of the point cloud video decoder of FIG. 11 may be implemented by hardware including one or more processors or integrated circuits configured to communicate with one or more memories included in the point cloud content providing apparatus, software, firmware, or a combination thereof. The one or more processors may perform at least one or more of the operations and/or functions of the elements of the point cloud video decoder of FIG. 11 described above. Additionally, the one or more processors may operate or execute a set of software programs and/or instructions for performing the operations and/or functions of the elements of the point cloud video decoder of FIG. 11.

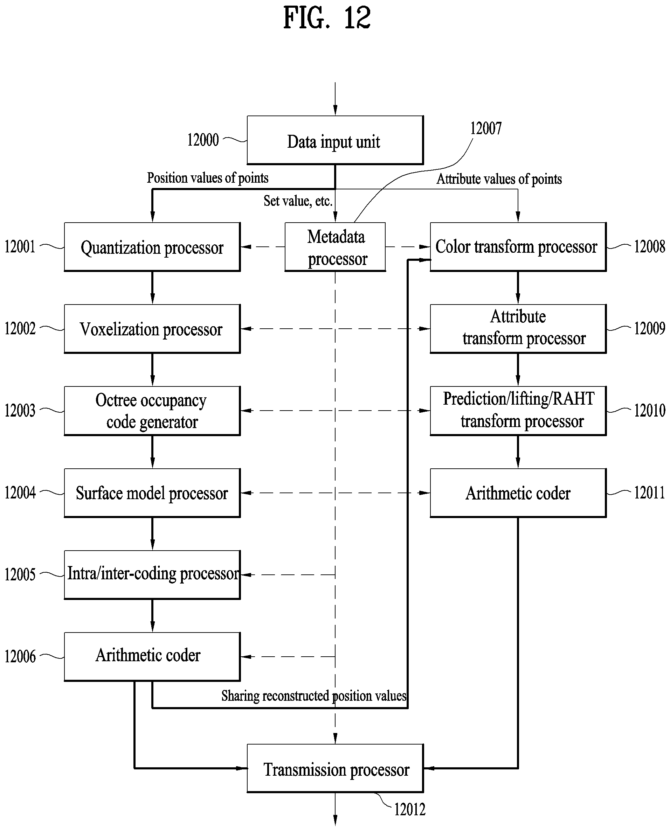

FIG. 12 illustrates a transmission device according to embodiments.

The transmission device shown in FIG. 12 is an example of the transmission device 10000 of FIG. 1 (or the point cloud video encoder of FIG. 4). The transmission device illustrated in FIG. 12 may perform one or more of the operations and methods the same as or similar to those of the point cloud video encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquisition unit 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 12002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud video encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud video encoder (e.g., the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. The detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. A detailed description thereof is omitted. The prediction/lifting/RAHT transform processor 12010 according to the embodiments may code the transformed attributes by any one or a combination of one or more of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 40012.

The transmission processor 12012 according to the embodiments may transmit each bitstream containing encoded geometry and/or encoded attributes and metadata, or transmit one bitstream configured with the encoded geometry and/or the encoded attributes and the metadata. When the encoded geometry and/or the encoded attributes and the metadata according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS or tile inventory) for signaling of a tile level, and slice data. The slice data may include information about one or more slices. One slice according to embodiments may include one geometry bitstream $Geom0^0$ and one or more attribute bitstreams $Attr0^0$ and $Attr1^0$.

A slice refers to a series of syntax elements representing the entirety or part of a coded point cloud frame.

The TPS (tile inventory) according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

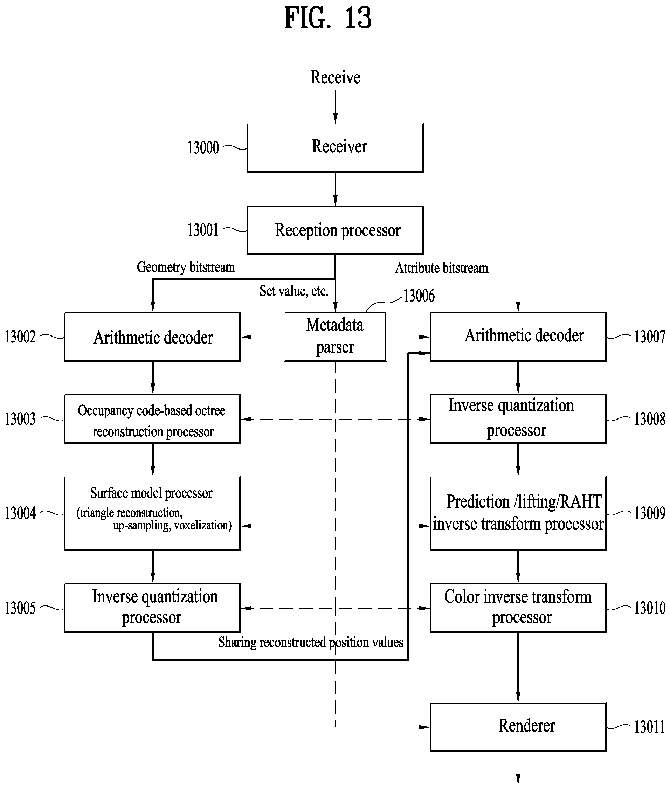

FIG. 13 illustrates a reception device according to embodiments.

The reception device illustrated in FIG. 13 is an example of the reception device 10004 of FIG. 1 (or the point cloud video decoder of FIGS. 10 and 11). The reception device illustrated in FIG. 13 may perform one or more of the operations and methods the same as or similar to those of the point cloud video decoder described with reference to FIGS. 1 to 11.

The reception device according to the embodiment includes a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform a reverse process to the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 13005 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 13004 according to the embodiments may perform trisoup geometry decoding and related geometry reconstruction (e.g., triangle reconstruction, up-sampling, voxelization) based on the surface model method. The surface model processor 13004 performs an operation the same as or similar to that of the surface approximation synthesizer 11002 and/or the geometry reconstructor 11003.

The inverse quantization processor 13005 according to the embodiments may inversely quantize the decoded geometry.

The metadata parser 13006 according to the embodiments may parse metadata contained in the received point cloud data, for example, a set value. The metadata parser 13006 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transform processor 13009 according to the embodiments may process the reconstructed geometry and the inversely quantized attributes. The prediction/lifting/RAHT inverse transform processor 13009 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

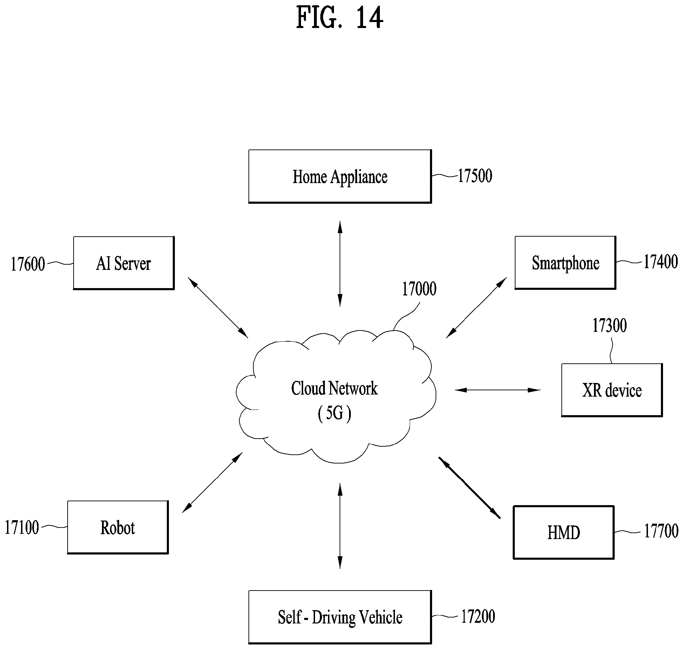

FIG. 14 shows an exemplary structure operatively connectable with a method/device for transmitting and receiving point cloud data according to embodiments.

The structure of FIG. 14 represents a configuration in which at least one of a server 17600, a robot 17100, a self-driving vehicle 17200, an XR device 17300, a smartphone 17400, a home appliance 17500, and/or a head-mount display (HMD) 17700 is connected to a cloud network 17000. The robot 17100, the self-driving vehicle 17200, the XR device 17300, the smartphone 17400, or the home appliance 17500 is referred to as a device. In addition, the XR device 17300 may correspond to a point cloud compressed data (PCC) device according to embodiments or may be operatively connected to the PCC device.

The cloud network 17000 may represent a network that constitutes part of the cloud computing infrastructure or is present in the cloud computing infrastructure. Here, the cloud network 17000 may be configured using a 3G network, 4G or Long Term Evolution (LTE) network, or a 5G network.

The server 17600 may be connected to at least one of the robot 17100, the self-driving vehicle 17200, the XR device 17300, the smartphone 17400, the home appliance 17500, and/or the HMD 17700 over the cloud network 17000 and may assist in at least a part of the processing of the connected devices 17100 to 17700.

The HMD 17700 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 17100 to 17500 to which the above-described technology is applied will be described. The devices 17100 to 17500 illustrated in FIG. 14 may be operatively connected/coupled to a point cloud data transmission device and reception device according to the above-described embodiments.

<PCC+XR>

The XR/PCC device 17300 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 17300 may analyze 3D point cloud data or image data acquired through various sensors or from an external device and generate position data and attribute data about 3D points. Thereby, the XR/PCC device 17300 may acquire information about the surrounding space or a real object, and render and output an XR object. For example, the XR/PCC device 17300 may match an XR object including auxiliary information about a recognized object with the recognized object and output the matched XR object.

<PCC+Self-driving+XR>

The self-driving vehicle 17200 may be implemented as a mobile robot, a vehicle, an unmanned aerial vehicle, or the like by applying the PCC technology and the XR technology.

The self-driving vehicle 17200 to which the XR/PCC technology is applied may represent a self-driving vehicle provided with means for providing an XR image, or a self-driving vehicle that is a target of control/interaction in the XR image. In particular, the self-driving vehicle 17200 which is a target of control/interaction in the XR image may be distinguished from the XR device 17300 and may be operatively connected thereto.

The self-driving vehicle 17200 having means for providing an XR/PCC image may acquire sensor information from sensors including a camera, and output the generated XR/PCC image based on the acquired sensor information. For example, the self-driving vehicle 17200 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 17200 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud compression data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

As described with reference to FIGS. 1 to 14, the point cloud data may include a set of points, and each point may have a geometry (referred to also as geometry information) and an attribute (referred to as attribute information). The geometry information represents three-dimensional (3D) position information about each point. In one embodiment, the position of each point may be represented by parameters in a coordinate system representing a 3D space (e.g., parameters (x, y, z) of three axes, X, Y, and Z axes, representing a space). In another embodiment, a 3D position of each point may be represented by spherical coordinates: laser ID (or elevation angle), azimuth, and radius. The attribute information represents color (RGB, YUV, etc.), reflectance, normal vectors, transparency, etc. of the point.

According to embodiments, a point cloud data encoding process includes compressing geometry information based on an octree, a trisoup, or prediction and compressing attribute information based on geometry information reconstructed (or decoded) with position information changed through compression. A point cloud data decoding process includes receiving an encoded geometry bitstream and an encoded attribute bitstream, decoding geometry information based on an octree, a trisoup, or prediction, and decoding attribute information based on geometry information reconstructed through the decoding operation.

Since octree-based or trisoup-based geometry information compression according to the embodiments has been described in detail with reference to FIGS. 4 to 13, a description thereof is omitted herein.

Hereinafter, in an embodiment of the present disclosure, prediction-based geometry information compression will be described. Prediction-based geometry information compression according to the embodiments is performed by defining a prediction structure for point cloud data. This structure is represented as a predictive tree having a vertex associated with each point of the point cloud data. The predictive tree may include a root vertex (referred to as a root point) and a leaf vertex (referred to as a leaf point). Points below the root point may have at least one child, and the depth increases toward the leaf point.

When point cloud data includes consecutive frames, a correlation between adjacent frames is high

In the present disclosure, prediction between frames may be performed based on this feature to obtain higher coding efficiency (i.e., compression efficiency). In the present disclosure, the term prediction between frames is used interchangeably with inter-prediction or inter-frame prediction.

According to embodiments, point cloud data may be collected (or acquired) from a LiDAR head that rotates one or more vertically arranged lasers 360 degrees in a horizontal direction. In this case, the LiDAR head includes one or more lasers (or laser sensors) disposed at regular angles in an elevation or vertical direction, and rotates horizontally about a vertical axis to acquire data. The arrival times (and/or wavelengths) of the laser beams output from the lasers to return from a target (e.g., object) on which they are reflected may be the same as or different from each other. Thus, the data acquired by LiDAR is a 3D representation that is configured based on a difference in time and/or wavelength between the laser beams returning from the target.

Here, the one or more vertically arranged lasers are identified by the laser ID, respectively. That is, each of the one or more lasers has a unique ID. In this case, the position of each point in the point cloud data may be distinguished by the laser ID (or elevation angle), azimuth angle, and radius.

In particular, when the LiDAR head rotates one or more vertically arranged lasers in a horizontal direction 360 degrees (or by a preset azimuth) to acquire point cloud data, the azimuth obtained through repeated rotations may vary due to the shaking of the LiDAR head and/or the one or more lasers during the rotation operation. To address this issue, a method of quantizing the azimuth may be utilized. In other words, the azimuth may be quantized at regular quantization intervals between 0 and 360 degrees. In the present disclosure, this is referred to as a quantized azimuth.

Hereinafter, a method of compressing geometry information by performing inter-frame prediction by a geometry encoder upon acquiring point cloud data using the LiDAR device such as the LiDAR head will be described.

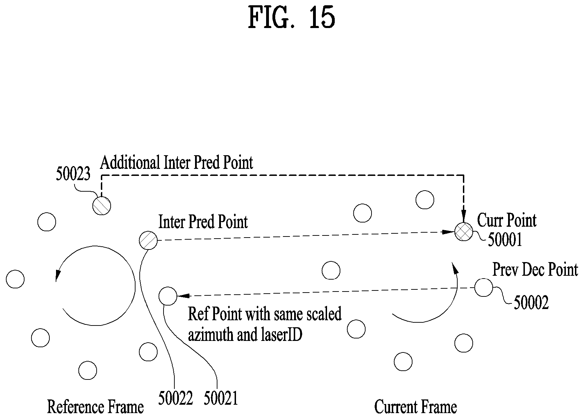

FIG. 15 illustrates an example of performing inter-frame prediction in a predictive tree structure according to embodiments.

That is, FIG. 15 illustrates a method of performing reference between adjacent frames for a predictive geometry coding method based on inter-prediction described above. In particular, FIG. 15 illustrates an example of using a node of a reference frame having a similar azimuthal angle (or azimuth) for the same laser ID (or elevation angle plane) as a reference node.

In this case, for points having the same elevation angle (or points having the same laser ID or acquired from the same laser), a predictive tree may be configured in a direction in which the azimuth angle increases.

In this case, when nodes are present as shown in FIG. 15, a predictive tree may be configured in a counterclockwise direction, and a compression target node 50001 (i.e., a current point or a current node) and a previous node 50002 (i.e., a parent node) in a current frame may be in a child-parent relationship. In this case, with respect to the reference frame, as a reference node (or referred to as a predicted value or predictor of the current point 50001) in the current frame), a point 50021 (i.e., a reference parent node) having the same elevation angle and similar azimuth angle as the previous compression node 50002 in the current frame may be selected. A child node 50022 (i.e., a reference node) of the selected node 50021 or a child node 50023 thereof (i.e., a reference child node) may be selected as a predicted value (i.e., a predictor).

In other words, one immediately preceding coded frame is selected as a reference frame through inter-frame (or screen) prediction in the current predictive tree structure. Then, a point (e.g., 50021) having the most similar azimuth to the previously decoded point 50002 in the current frame and having a laser ID at the same position is searched for in the reference frame. Then, the nearest point (e.g., 50022) or the next nearest point (e.g., 50023) among the points having the greatest azimuth from the found point is selected as a predicted value, that is, a predictor of the current point 50001 in the current frame. In this regard, selecting the nearest point as the predictor and selecting the second nearest point as the predictor may be separately signaled through flag information. When inter-frame prediction is performed, point information to be selected as the position of the current point may be determined, and then the information about the predictor may be transmitted to the receiver. The predicted value or predictor according to the embodiments may be referred to as a candidate point (or node) or a prediction target point (or node) for predicting the current point.

In another embodiment, a point to be referenced to predict the current point in the current frame may be searched for in a predetermined mapping point list in finding the point in the reference frame. Regardless of the distribution of the points, the first point coded for azimuth and laserID is simply taken as each element of the mapping point list. Also, the azimuth is not the actual azimuth value, but a quantized value for each range (this is called quantized azimuth). This has the disadvantage that the distribution of points is predicted with a single azimuth quantization, which leads to a large residual value for all points except for a specific point, even though the distribution of core points should be finer in regions with a dense distribution of points. In particular, the difference between the radius of the current point in the current frame and the radius of the reference point in the reference frame becomes larger. This may increase the size of the bitstream to be transmitted, which may lead to poor compression efficiency.

For example, a mapping point list (also referred to as a core point list) may be generated as a set of paired values of quantized azimuth and radius for each laser ID by selecting as a core point the point with the first coded radius among the radii with the same quantized azimuth for the same laser ID. However, this mapping points list has the limitation of being mapped to a point of a single radius depending on the distribution of the point cloud as described above. In other words, when there are multiple points of different radii within a specific quantized azimuth of a specific laser ID, a point of a single radius (e.g., the first coded point) is selected as the core point of the mapping points list.

To address these drawbacks and improve compression efficiency of point cloud data having one or more frames, the present disclosure proposes a method of generating a core point list of point cloud content containing partially duplicate information. In the present disclosure, a core point list is used interchangeably with a mapping point list, a core position list, or a core point information list.

In other words, as a method to improve compression efficiency of point cloud data having one or more frames, the present disclosure proposes a method to allow for duplicate information in generating a core point list to predict each node from predictive tree geometry information in order to apply an inter-frame prediction technique.

To this end, in the present disclosure, point cloud data (e.g., point cloud content, a point cloud frame, or a point cloud slice) may be partitioned into multiple regions, and then a mapping point list is configured in the partitioned regions. In other words, by partitioning frame-level or slice-level point cloud data into multiple regions (or units) and configuring a core point list in each region, duplicate information may be allowed.

Here, the duplicate information may mean that two or more points with different radii within the same quantized azimuth of the same laser ID are selected as core points. In other words, when duplicate information is not allowed, only the point with the first coded radius among the two or more points with different radii within the same quantized azimuth of the same laser ID is selected as a core point because the mapping point list is configured on a per point cloud frame (or slice) basis. In contrast, when duplicate information is allowed, two or more points with different radii within the same quantized azimuth of the same laser ID may be selected as core points by partitioning the point cloud frame into multiple regions and then configuring the mapping point list in the partitioned regions.

For example, when there are five points with different radii within the same quantized azimuth of the same laser ID, only the point with the first coded radius among the five radii is selected as the core point if duplicate information is not allowed. However, if duplicate information is allowed, points with one or two or more radii among the five radii may be selected as core points. In one embodiment, the mapping point list may be generated from a reference frame.

As described above, in the present disclosure, the point cloud content (or a point cloud frame or slice) is partitioned into multiple units (e.g., regions) to generate an appropriate mapping point list. Furthermore, after partitioning the point cloud content, a mapping point list may be generated in which some elements are duplicated. Further, in each of the partitioned units (e.g., regions) of the point cloud content, points positioned at regular intervals (or equal intervals) may be selected (or sampled) for core point selection.

According to embodiments, the aforementioned partitioning of the point cloud content (or point cloud frame or slice) and generation of the mapping point list may be performed by an encoding process of the point cloud data. According to embodiments, the partitioning of the point cloud content is performed both in a reference frame and in the current frame, and the mapping point list is generated based on the partitioned reference frame.

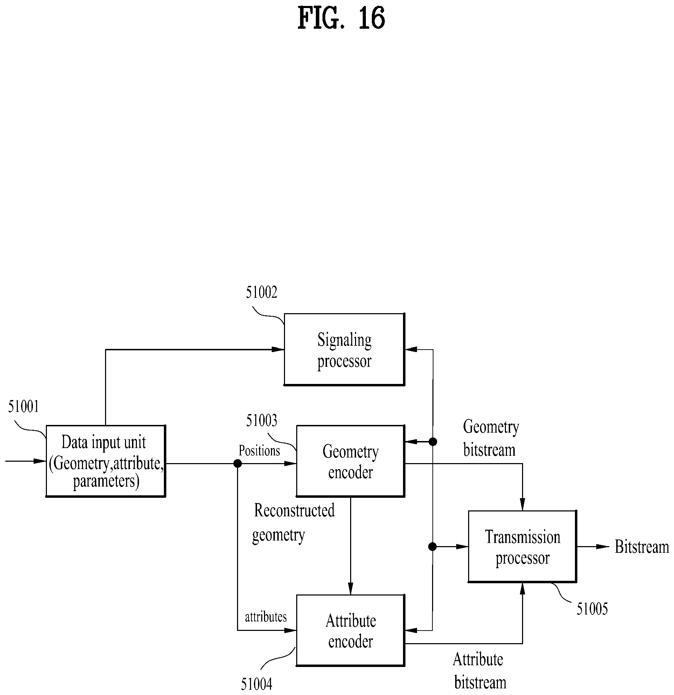

The point cloud data transmission method/device according to the embodiments is construed as a term referring to the transmission device 10000, point cloud video encoder 10002, and transmitter 10003 of FIG. 1, the acquisition 20000-encoding 20001-transmission 20002 of FIG. 2, the point cloud video encoder of FIG. 4, the transmission device of FIG. 12, the device of FIG. 14, the transmission device of FIG. 16, and the like.

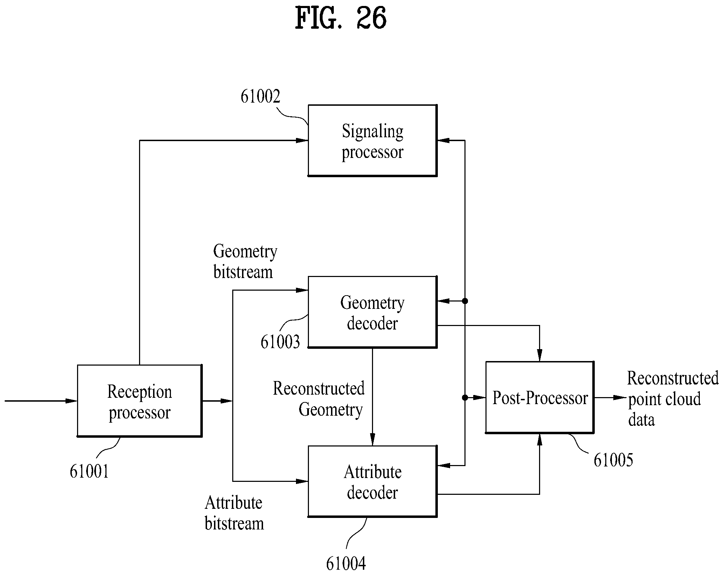

The point cloud data reception method/device according to the embodiments is construed as a term referring to the reception device 10004, receiver 10005, and point cloud video decoder 10006 of FIG. 1, the transmission 20002-decoding 20003-rendering 20004 of FIG. 2, the decoder of FIG. 10, the point cloud video decoder of FIG. 11, the reception device of FIG. 13, the device of FIG. 14, the reception device of FIG. 26, and the like.

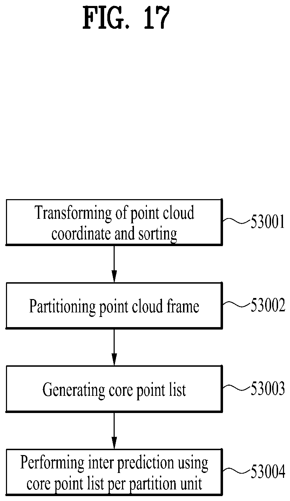

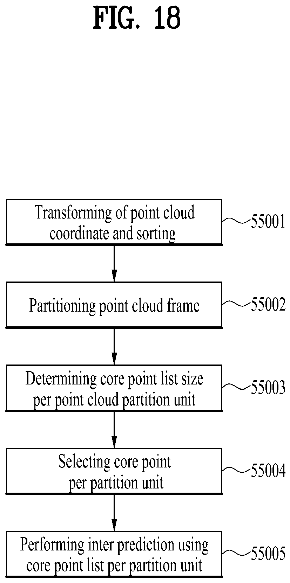

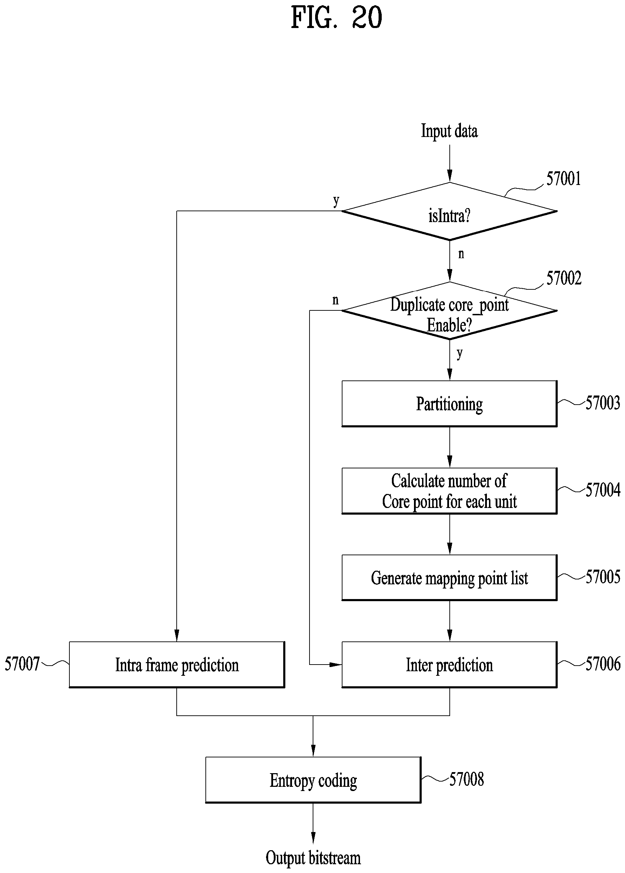

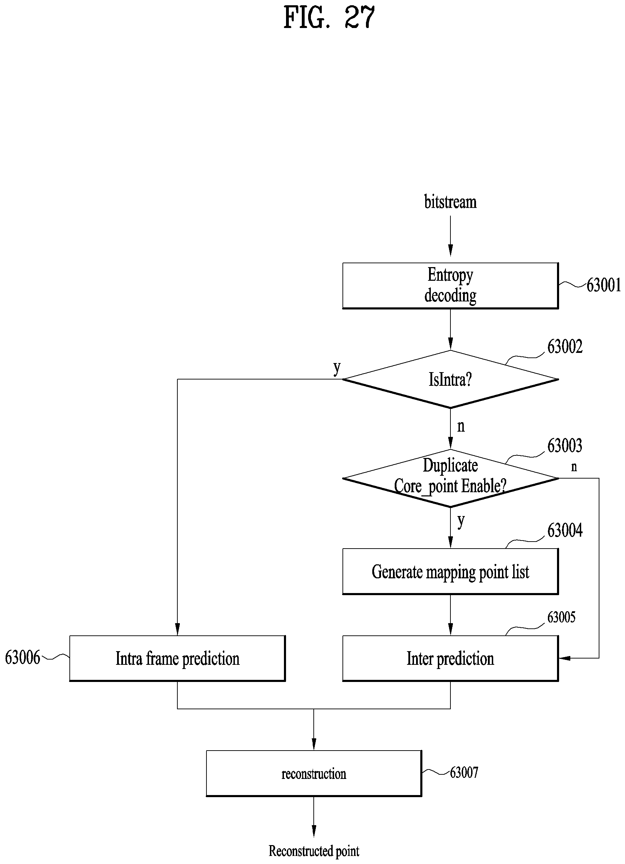

According to embodiments, the encoding of the point cloud data may be performed by the point cloud video encoder 10002 of FIG. 1, the encoder 20001 of FIG. 2, the point cloud video encoder of FIG. 4, the point cloud video encoder of FIG. 12, the geometry encoder 51003 of FIG. 16, the geometry encoding of FIG. 17 or FIG. 18, or the geometry encoding of FIG. 20. The decoding of the point cloud data according to embodiments may be performed by the point cloud video decoder 10006 of FIG. 1, the decoder 20003 of FIG. 2, the point cloud video decoder of FIG. 11, the point cloud video decoder of FIG. 13, the geometry decoder 61003 of FIG. 26, or the geometry decoding of FIG. 27.

According to embodiments, geometry data, geometry information, position information, and the like constituting the point cloud data are construed as having the same meaning. In addition, attribute data, attribute information, and the like constituting point cloud data are construed as having the same meaning.

FIG. 16 illustrates another example of a point cloud transmission device according to embodiments. The elements of the point cloud transmission device illustrated in FIG. 16 may be implemented by hardware, software, a processor, and/or a combination thereof.

According to embodiments, the point cloud transmission device may include a data input unit 51001, a signaling processor 51002, a geometry encoder 51003, an attribute encoder 51004, and a transmission processor 51005.

The geometry encoder 51003 and the attribute encoder 51004 may perform some or all of the operations described in the point cloud video encoder 10002 of FIG. 1, the encoding 20001 of FIG. 2, the point cloud video encoder of FIG. 4, and the point cloud video encoder of FIG. 12.

The data input unit 51001 according to embodiments receives or acquires point cloud data. The data input unit 51001 may perform some or all of operations of the point cloud video acquisition unit 10001 in FIG. 1 or some or all of the operations of the data input unit 12000 in FIG. 12.

The data input unit 51001 outputs positions of points of point cloud data to the geometry encoder 51003, and outputs attributes of points of point cloud data to the attribute encoder 51004. Parameters are output to the signaling processor 51002. In some embodiments, the parameters may be provided to the geometry encoder 51003 and the attribute encoder 51004.

According to embodiments, the data input unit 51001 may use one or more cameras (e.g., an infrared camera capable of securing depth information, an RGB camera capable of extracting color information corresponding to the depth information, etc.), a projector (e.g., an infrared pattern projector configured to secure depth information, etc.), LiDAR, or the like to acquire point cloud content (also referred to as point cloud data).

For example, point cloud data acquired with LIDAR equipment may be widely utilized in various fields that employ computer vision technology, such as autonomous vehicles, robotics, and 3D map production. Further, the point cloud data acquired by the LiDAR equipment may be composed of multiple frames, or multiple frames may be integrated into a single piece of point cloud content.

The geometry encoder 51003 performs entropy encoding on the compressed geometry information and outputs the encoded information to the transmission processor 51005 in the form of a geometry bitstream.

The geometry encoder 51003 reconfigures the geometry information based on positions changed through compression, and outputs the reconfigured (or decoded) geometry information to the attribute encoder 51004.

The attribute encoder 51004 compresses attribute information based on positions at which geometry encoding is not performed and/or reconfigured geometry information. According to an embodiment, the attribute information may be coded using any one or a combination of one or more of RAHT coding, LOD-based predictive transform coding, and lifting transform coding. The attribute encoder 51004 performs entropy encoding on the compressed attribute information and outputs the information to the transmission processor 51005 in the form of an attribute bitstream.

The signaling processor 51002 may generate and/or processes signaling information necessary for encoding/-decoding/rendering of the geometry information and attribute information and provide the generated and/or processed signaling information to the geometry encoder 51003, the attribute encoder 51004, and/or the transmission processor 51005. Alternatively, the signaling processor 51002 may be provided with the signaling information generated by the geometry encoder 51003, the attribute encoder 51004, and/or the transmission processor 51005. The signaling processor 51002 may provide information fed back from the reception device (e.g., head orientation information and/or viewport information) to the geometry encoder 51003, the attribute encoder 51004, and/or the transmission processor 51005.

In the present disclosure, the signaling information may be signaled and transmitted on the basis of a parameter set, such as a sequence parameter set (SPS), geometry parameter set (GPS), attribute parameter set (APS), or tile parameter set (TPS) (also referred to as tile inventory). It may be signaled and transmitted per coding unit or compression unit or prediction unit) of each video, such as slice or tile.

According to embodiments, the transmission processor 51005 may perform the same or similar operation and/or transmission method as the operation and/or transmission method of the transmission processor 12012 of FIG. 12, or may perform the same or similar operation and/or transmission method as the operations and/or transmission method of the transmitter 10003 of FIG. 1. For further details, refer to the description of FIG. 1 or 12, which will not be described below.

The transmission processor 51005 may multiplex the geometry bitstream output from the geometry encoder 51003, the attribute bitstream output from the attribute encoder 51004, and the signaling bitstream output from the signaling processor 51002 into a single bitstream to be transmitted, or may encapsulate the bitstreams into a file, segment, or the like to be transmitted. In one embodiment, the file may be in the ISOBMFF file format.

According to embodiments, the file or segment may be transmitted to the reception device over a network, or stored in a digital storage medium (e.g., USB, SD, CD, DVD, Blu-ray, HDD, SSD, etc.). The transmission processor 51005 according to the embodiments is capable of wired/wireless communication with the reception device over a network of 4G, 5G, 6G, etc. In addition, the transmission processor 51005 may perform a necessary data processing operation according to the network system (e.g., a 4G, 5G or 6G communication network system). The transmission processor 51005 may transmit the encapsulated data in an on-demand manner.

According to embodiments, information related to the geometry prediction may be included in the SPS, GPS, and/or geometry slice (or referred to as the geometry slice bitstream) and transmitted by at least one of the signaling processor 51002, the geometry encoder 51003, or the transmission processor 51005.

In one embodiment, the process of partitioning the reference frame into a plurality of regions and generating a mapping point list in the partitioned regions is performed by the geometry encoder 51003. In another embodiment, the process of partitioning the reference frame into a plurality of regions and generating a mapping point list in the partitioned regions may be performed by the point cloud video encoder 10002 of FIG. 1, the encoding 20001 of FIG. 2, the point cloud video encoder of FIG. 4, or the point cloud video encoder of FIG. 12.

In the following, a regional partitioning method for configuring, by the geometry encoder 51003, a mapping point list (or core point list) in which some elements of the core points are duplicate is described.

As described above, when duplicate information is not allowed, a mapping point list (or a core point list) may be generated as a set of paired values of quantized azimuth and radius for each laser ID by selecting as a core point the point with the first coded radius among the radii with the same quantized azimuth for the same laser ID. However, this mapping points list has the limitation of being mapped to a point of a single radius depending on the distribution of the point cloud as described above. To address this issue, the present disclosure may allow for duplicate information, such that multiple radius values representing the same laser ID and the same quantized azimuth may be obtained by partitioning prior to the configuration of a mapping point list (or core point list).

In other words, according to the present disclosure, the point cloud content (e.g., reference frame) may be partitioned into a plurality of regions in order to configure an appropriate mapping point list (or core point list). The mapping point list may be configured in each region of the partitioned reference frame and then used to predict points corresponding to the same region in the current frame.

Next, a method of configuring a mapping point list (or core point list) by the geometry encoder 51003 to perform inter-prediction (i.e., inter-frame prediction) will be described.

FIG. 17 is a block diagram illustrating a process of configuring a mapping point list and performing inter-prediction according to a first embodiment. The elements illustrated in FIG. 17 may be implemented in hardware, software, a processor, and/or a combination thereof.

According to the first embodiment, each element of the mapping point list created in each partitioned region selects evenly spaced points among the points contained in each partitioned region and transforms the points into spherical coordinates. Then, a mapping point list may be configured with paired values of quantized azimuth and radius for each laser ID. In this case, the configured core points can have multiple radius values for the same laser ID and quantized azimuth. The multiple radius values that may be obtained for the same laser ID and the same quantized azimuth are referred to herein as duplicate information.

The geometry encoder 51003 for configuring the mapping point list according to the first embodiment may include a point cloud coordinate transformation and sorting part 53001, a point cloud frame partitioner 53002, a mapping point list (or core point list) generator 53003, and an inter-predictor 53004.

In other words, the point cloud coordinate transformation and sorting part 53001 may transform the coordinates of each point of the point cloud data from spherical coordinates to Cartesian coordinates if the coordinates of the point cloud need to be transformed to Cartesian coordinates, or may transform the Cartesian coordinates to the spherical coordinates according to the purpose. After the coordinate transformation, the point cloud data may be sorted based on one of azimuth, radius, elevation, or laser ID, or may be sorted based on one of x, y, or z axis.

The point cloud frame partitioner 53002 may partition the sorted point cloud data (e.g., reference frame) into multiple regions based on a predetermined criterion. According to embodiments, the predetermined criterion may be a laser ID, an azimuth, a radius, or a combination of two or more of the above. That is, the reference frame may be partitioned into multiple regions based on a laser ID, an azimuth, a radius, or a combination of two or more of the above. According to embodiments, the total number of mapping point lists and/or the total number of the partitioned regions may be preset and included in the signaling information and transmitted to the receiving side. In other embodiments, the partitioning may be performed based on a cube or cuboid, or may be performed based on one or a combination of two or more of the x, y, and z axes. Here, the partitioning method may be transmitted in the signaling information.

The mapping point list generator 53003 selects paired values of the quantized azimuth and the first coded radius for each laser ID in each partitioned region as a core point (or mapping point), and generates a mapping point list for the region with the selected core point in each region. Thus, an independent mapping point list (or core point list) may be obtained for each partitioned region. For example, assuming that the reference frame is partitioned into two regions, the core point of the mapping point list generated in a first region and the core point of the mapping point list generated in a second region may have the same laser ID and quantized azimuth, and have different radius values.

Further, the mapping point list generator 53003 partitions the current frame in the same way. In other words, the current frame may be partitioned into multiple regions based on laser ID, azimuth, radius, or a combination of two or more thereof in the same way as the partitioning of the reference frame. For example, when the reference frame is partitioned based on the azimuth, the current frame is also partitioned based on the azimuth.

When the current frame is partitioned in the same way as the reference frame, the inter-predictor 53004 performs inter-prediction (i.e., inter-frame prediction) based on the mapping point list of the reference frame at the same position. That is, the current point in a specific region in the current frame is predicted based on the core point in the mapping point list for the same region in the reference frame, and the residual information (or prediction error) is output. In one embodiment, the inter-predictor 53004 may output a difference (i.e., residual information) between the current point of the specific region in the current frame and the core point of the mapping point list for the same region in the reference frame. The residual information may be a difference in radius and/or a difference in quantized azimuth and/or a difference in laser ID between the current point in the current frame and the core point in the reference frame. Here, the partitioning into multiple regions may be performed on frames or slices.

FIG. 18 is a block diagram illustrating a process of configuring a mapping point list and performing inter-prediction according to a second embodiment. The elements illustrated in FIG. 18 may be implemented in hardware, software, a processor, and/or a combination thereof.

According to a second embodiment, the total number of mapping point lists may be preset in the same manner as in the first embodiment described above, and more core points (or mapping points) may be selected in a region where points are concentrated based on a ratio of the number of points included in each region to the total number of points. In this regard, in order to select a corresponding number of core points for each partition unit, points at evenly spaced positions in each partition unit may be selected as core points. For example, one point may be selected (or sampled) as a core point per every two points, every three points, or every four points. In this way, the present disclosure may adjust the number of core points according to the distribution of points by configuring a mapping point list (or core position list) through position adaptive sampling, thereby increasing the accuracy of configuration of the mapping point list (or core position list).

The geometry encoder 51003 for configuring the mapping point list according to the second embodiment may include a point cloud coordinate transformation and sorting part 55001, a point cloud frame partitioner 55002, a mapping point list size determination part 55003, a core point selector 55004, and an inter-predictor 55005.

In other words, the point cloud coordinate transformation and sorting part 55001 may transform the coordinates of the point cloud from spherical coordinates to Cartesian coordinates if the coordinates of the point cloud need to be transformed to Cartesian coordinates, or may transform the Cartesian coordinates to the spherical coordinates according to the purpose. After the coordinate transformation, the point cloud data may be sorted based on one of azimuth, radius, elevation, or laser ID, or may be sorted based on one of x, y, or z axis.

The point cloud frame partitioner 53002 may partition the sorted point cloud data (e.g., reference frame or slice) into multiple regions based on a predetermined criterion. According to embodiments, the predetermined criterion may be a laser ID, an azimuth, a radius, or a combination of two or more of the above. That is, the reference frame may be partitioned into multiple regions based on a laser ID, an azimuth, a radius, or a combination of two or more of the above. According to embodiments, the total number of mapping point lists and/or the total number of the partitioned regions may be preset and included in the signaling information and transmitted to the receiving side.

The mapping point list size determination part 55003 determines the number of core points for each region based on a ratio of the number of points included in each region to the total number of points. In this way, more core points may be selected in a region where points are concentrated. The selection method is configured in the following way to perform inter-frame prediction.

That is, the number of core points (also referred to as mapping points) for each partition unit (e.g., region) may be determined based on the number of points included in each partition unit. According to embodiments, the number of points included in each partitioned unit (e.g., region) may be counted and the ratio to the number of points in the entire point cloud may be calculated. In this case, the overall size (or number) of the mapping point lists (or core point lists) may be pre-input to the system, or may be input by a user, or may be determined in proportion to the total number of points in the point cloud. In another embodiment, after the size (or number) of the mapping point lists (or core point lists) is determined, the number of core points for each unit (e.g., region) may be determined by applying the ratio of the number of points per partition unit to the calculated total number of points.

The core point selector 55004 may extract a corresponding number of core points by selecting points at evenly spaced positions in each region. In another embodiment, a corresponding number of points may be selected starting with the first coded radius according to the quantized azimuth.

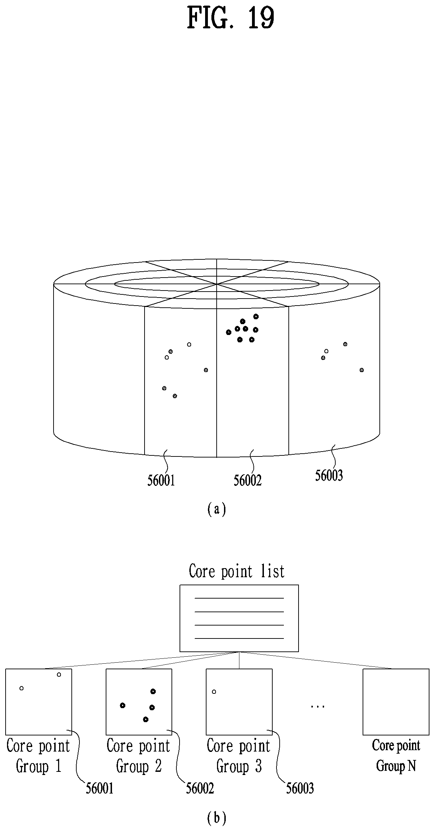

FIG. 19 illustrates an example of a method of selecting core points by the core point selector 55004 according to embodiments. That is, once the size of the mapping point list for each partition unit is determined after partitioning the reference frame based on the azimuth and radius, points at positions evenly spaced apart from each other (or at constant intervals) according to the number of points in each partition unit may be selected as core points. For example, based on the total number of points and the number of core points in the unit, one core point may be selected from every two points (56002), or one core point may be selected from among every three points (56001), or one core point may be selected from among every four points (56003). Then, a mapping point list may be generated according to the number of selected core points in each region (i.e., partition unit). Alternatively, the mapping point lists generated in the respective regions may be integrated into one list.

In this case, the current frame may also be partitioned into multiple regions based on laser ID, azimuth, radius, or a combination of two or more thereof, in the same way as the partitioning of the reference frame. For example, when the reference frame is partitioned based on the azimuth, the current frame is also partitioned based on the azimuth.

The inter-predictor 55005 may integrate the mapping points (or core points) determined in the respective partition units into one core point list (or mapping point list) for use in inter-frame prediction, or may perform inter-frame prediction within a separate core point group (or core point list) for each partition unit. Accordingly, the residual information output from the inter-predictor 55005 may be at the level of the integrated core point list or at the level of the core point group. Here, the residual information may be a difference in radius and/or a difference in quantized azimuth and/or a difference in laser ID between the current point and the core point.

FIG. 20 is a flowchart illustrating an example method of encoding geometry information by the geometry encoder 51003 of the transmission device according to embodiments.

That is, the position information (e.g., geometry information) about the points that are separated and output by the data input unit 51001 is input to the geometry encoder 51003 and subjected to coordinate transformation into a form that may be coded. For example, it may be transformed from Cartesian coordinates to spherical coordinates, or from spherical coordinates to Cartesian coordinates. Then, based on the transformed coordinates, the points are sorted based on one or more of laser ID, azimuth, and radius, or sorted based on one or more of X-axis, Y-axis, and Z-axis.

In operation 57001, it is determined whether the frame (or slice) having the sorted points is intra-prediction or inter- prediction.

When it is determined in operation 57001 that the frame is for intra-prediction, the process proceeds to operation 57007 to compress the geometry information according to the intra-prediction method.

When it is determined in operation 57001 that the frame is not for intra-prediction, namely, it is for inter-prediction, it is determined whether to allow duplicate information in a core point list (also called mapping point list) (operation 57002).

When it is determined in operation 57002 that duplicate information is not allowed, inter-prediction is performed based on a reference frame-based mapping point list (operation 57006).

When it is determined in operation 57002 that duplicate information is allowed, the reference frame is partitioned into multiple regions (operation 57003). In other words, allowing duplicate information means that the reference frame (or slice) and/or the current frame (or slice) is partitioned into multiple regions, and then a mapping point list is generated for each partitioned region. For example, when duplicate information is not allowed, only one point with a specific radius within the same laser ID and the same quantized azimuth is selected as a core point. However, when duplicate information is allowed, multiple points with different radii within the same laser ID and the same quantized azimuth may be selected as core points.

In addition, when duplicate information is allowed, the mapping point list may be generated based on the first embodiment of FIG. 17 or the second embodiment of FIG. 18 described above.

The first embodiment may have an independent mapping point list for each partitioned region. In other words, for each partitioned region, a point having a pair of the first coded radius and quantized azimuth among the points included in a specific region may be selected as a core point to configure a mapping point list for the region. The points included in the specific region may be all the points in the region, or may be selected at positions evenly spaced apart from each other from among all points in the region.

In the second embodiment, preset the total number of mapping point lists may be on a per frame (or slice) basis, and mapping point lists may be generated by selecting more core points in a region where points are concentrated according to the ratio of the number of points included in each region partitioned from the frame (or slice) to the total number of points. In each region, as many mapping point lists as the number of calculated mapping points may be generated. The number of mapping points selected in each region varies among the regions. For example, the number of mapping points selected in a region with a large number of points is larger than the number of mapping points selected in a region with a small number of points. FIG. 20 illustrates an example of generating mapping point lists and performing inter-prediction based on the second embodiment.

That is, when a reference frame (or slice) is partitioned into multiple units (e.g., regions) in operation 57003, the number of mapping points (or core points) that need to be generated in each of the partitioned units is calculated in operation 57004. In operation 57005, mapping point lists are generated by selecting mapping points at as many equally spaced positions as the number of mapping points in each of the partitioned units.

Then, inter-prediction is performed based on the mapping point lists generated in operation 57005 (operation 57006). The current frame is partitioned into multiple units (e.g., regions) in the same way as the reference frame for inter-prediction.

The geometry information inter-predicted in operation 57006 or geometry information intra-predicted in operation 57007 is entropy-coded and output in the form of a bitstream (e.g., geometry bitstream) (operation 57008).

Thus, when the reference frame with input points is for intra-prediction, the geometry encoder 51003 of FIG. 20 generates a bitstream after performing entropy coding using a conventional intra-prediction method. When the frame is not for intra-prediction, the geometry encoder determines whether to allow duplicate information in the core point list. When duplicate information is allowed, the encoder partitions the frame into multiple partition units (e.g., regions) by applying a partitioning method pre-input in the system. Then, the number of mapping points (or core points) that need to be generated in each partition unit is calculated, and a mapping point list is generated with the number of points in each partition unit to perform inter-prediction. When duplicate information is not allowed, inter-prediction is performed using a conventional method. Then, the intra-predicted or inter-predicted geometry information is entropy-coded to generate a bitstream.

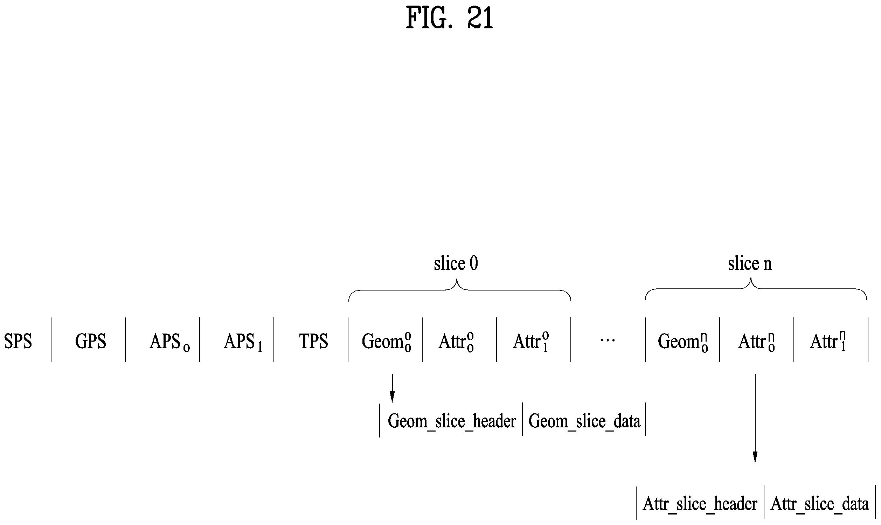

FIG. 21 illustrates an example of a bitstream structure of point cloud data for transmission/reception according to embodiments. According to embodiments, the bitstream output from the point cloud video encoder in any one of FIGS. 1, 2, 4, 12, 16, 17, 18, and 20 may be in the form of FIG. 21.

According to embodiments, tiles or slices are provided such that the bitstream of point cloud data may be partitioned into regions to be processed. Each region of the bitstream according to embodiments may have different importance. Therefore, when point cloud data is partitioned into tiles, different filters (encoding methods) and different filter units may be applied to the tiles, respectively. When point cloud data is partitioned into slices, different filters and different filter units may be applied to the slices, respectively.

The transmission device and method according to the embodiments may transmit point cloud data according to the bitstream structure as shown in FIG. 21, and thus may provide a method of applying different encoding operations according to importance and using an encoding method with good quality in an important region. In addition, efficient encoding and transmission according to the characteristics of point cloud data may be supported and attribute values according to user requirements may be provided.

The reception device and method according to embodiments receives point cloud data according to the bitstream structure as shown in FIG. 21, and thus a different filtering method (decoding method) may be applied for each region (region partitioned into tiles or slices) instead of using a complicated decoding (filtering) method for the entire point cloud data according to the processing capacity of the reception device. Accordingly, a better image quality in a region important to a user and appropriate latency on a system may be ensured.

When a geometry bitstream, an attribute bitstream, and/or a signaling bitstream (or signaling information) according to embodiments constitute one bitstream (or G-PCC bitstream) as shown in FIG. 21, the bitstream may include one or more sub-bitstreams. According to embodiments, a bitstream may contain a sequence parameter set (SPS) for signaling of a sequence level, a geometry parameter set (GPS) for signaling of geometry information coding, one or more attribute parameter sets (APSs) ($APS_0$ and $APS_1$) for signaling of attribute information coding, a tile inventory (also referred to as a TPS) for signaling at a tile level, and one or more slices (slice 0 to slice n). That is, a bitstream of point cloud data according to embodiments may include one or more tiles, wherein each tile may be a slice group including one or more slices (slice 0 to slice n). The tile inventory (i.e., TPS) may include information about each of the one or more tiles (e.g., coordinate value information and height/size information related to a tile bounding box). Each slice may include one geometry bitstream (Geom0) and/or one or more attribute bitstreams (Attr0 and Attr1). For example, slice 0 may include one geometry bitstream ($Geom0^0$) and one or more attribute bitstreams ($Attr0^0$ and $Attr1^0$).

The geometry bitstream in each slice may include a geometry slice header (geom_slice_header) and geometry slice data (geom_slice data). According to embodiments, the geometry bitstream in each slice may be referred to as a geometry data unit, and the geometry slice header may be referred to as a geometry data unit header. Also, the geometry slice data may be referred to as geometry data unit data. According to embodiments, the geometry slice header (or geometry data unit header) may include identification information (geom_parameter_set_id) related to a parameter set included in a geometry parameter set (GPS), a tile identifier (geom_tile_id), a slice identifier (geom_slice_id), and information (geomBoxOrigin, geom_box_log2 scale, geom_max_node_size_log2, geom_num_points) about data included in the geometry slice data (geom_slice data). geomBoxOrigin is geometry box origin information indicating the box origin of the geometry slice data, geom_box_log2_scale is information indicating a log scale of the geometry slice data, geom_max_node size_log2 is information indicating the size of the root geometry octree node, and geom_num_points is information related to the number of points of the geometry slice data. The geometry slice data (or geometry data unit data) may include geometry information (or geometry data) related to the point cloud data in a corresponding slice.

Each attribute bitstream in each slice may include an attribute slice header (attr slice_header) and attribute slice data (attr _slice_data). According to embodiments, the attribute bitstream in each slice may be referred to as an attribute data unit. Also, the attribute slice header may be referred to as an attribute data unit header, and the attribute slice data may be referred to as attribute data unit data. According to embodiments, the attribute slice header (or attribute data unit header) may include information about the corresponding attribute slice data (or corresponding attribute data unit), and the attribute slice data may include attribute information (also referred to as attribute data or attribute value) related to the point cloud data in the corresponding slice. When a plurality of attribute bitstreams is present in one slice, each attribute bitstream may include different attribute information. For example, one attribute bitstream may include attribute information corresponding to color, and another attribute stream may include attribute information corresponding to reflectance.

According to embodiments, parameters required for encoding and/or decoding of point cloud data may be defined in parameter sets of point cloud data (e.g., SPS, GPS, APS, and TPS (also referred to as a tile inventory)) and/or a header of the corresponding slice. For example, in encoding and/or decoding of geometry information, the parameters may be added to the GPS. In tile-based encoding and/or decoding, the parameters may be added to a tile and/or slice header.

According to embodiments, the geometry compression-related information may be signaled in at least one of the SPS, the GPS, the geometry slice header (or geometry data unit header), or the geometry slice data (or geometry data unit data).

According to embodiments, geometry compression related information may be signaled in the APS and/or the attribute slice header (also referred to as an attribute data unit header) so as to be associated with or be applied to an attribute coding method or applied to attribute coding.

According to embodiments, parameters (which may be referred to metadata, signaling information, or the like) containing the geometry compression related information may be generated by a metadata processor (or metadata generator) or signaling processor of a transmission device, and may be delivered to a reception device so as to be used in a decoding/reconstruction process. For example, a parameter generated and transmitted by the transmission device may be acquired by a metadata parser of the reception device.

According to embodiments of the present disclosure, signaling of geometry compression-related information required to allow duplicate information in a mapping point list may be signaled. For example, in the present disclosure, the geometry compression-related information may include information for regional partitioning for position-adaptive configuration of core point lists and information for a method of configuring core point lists.

According to embodiments, the SPS may signal that duplication of information of elements included in the core point list is allowed for inter-prediction, all or part of information necessary for the signaling is carried in the SPS according to an implementation method, and corresponding information may be carried in the GPS, the geometry slice header, the SEI message, or the like. According to embodiments, the geometry compression-related information may be defined at a corresponding position or a separate position depending on the application or system to use a different application range, a different application method, and the like. In addition, when the information including the similar function is signaled in a higher level, the signaling may be omitted in a lower-level parameter set. In addition, when a syntax element defined below is applicable to a plurality of point cloud data streams as well as the current point cloud data stream, the geometry compression-related information may be carried in a higher-level parameter set, or the like.

In other words, the SPS may signal that duplicate information about elements in the core point list is allowed for inter-prediction, the GPS may signal initial parameters for allowing the duplicate information, and the geometry slice unit may signal information for using the core point list in duplicate information is allowed. While the information is described as being used for geometry, the information may be shared for attribute coding, and the position of the configured signaling may be added to a higher/lower-level syntax structure depending on the purpose.

A field, a term used in syntaxes of the present disclosure described below, may have the same meaning as a parameter or a syntax element.

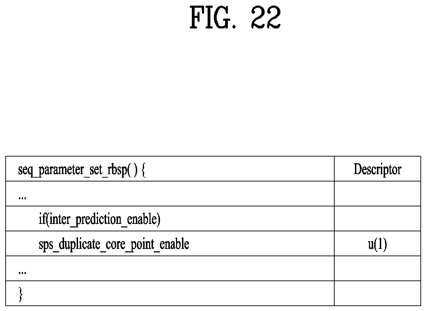

FIG. 22 illustrates a syntax structure of an SPS (seq_parameter_set_rbsp()) according to an embodiment of the present disclosure. The SPS may contain sequence information about the point cloud data bitstream. In particular, in this example, the SPS may contain geometry compression-related information. That is, the geometry compression-related information, including core point list configuration information for allowing for duplicate information, may be added to the SPS and signaled.

The SPS according to embodiments may include an inter_prediction_enable field.

The inter_prediction_enable indicates whether the sequence is subject to inter-prediction or intra-prediction.

When the inter_prediction_enable indicates that the sequence is subject to inter-prediction, the SPS may further include a sps duplicate core_point enable field.

The sps duplicate core_point enable field may signal whether the core point list (or mapping point list) is subject to a core point list scheme that allows duplicate core points. For example, when the value of the sps duplicate core_point enable field is TRUE, it may indicate that duplicate core point elements are allowed. When the value is FALSE, it may indicate that duplicate core point elements are not allowed.

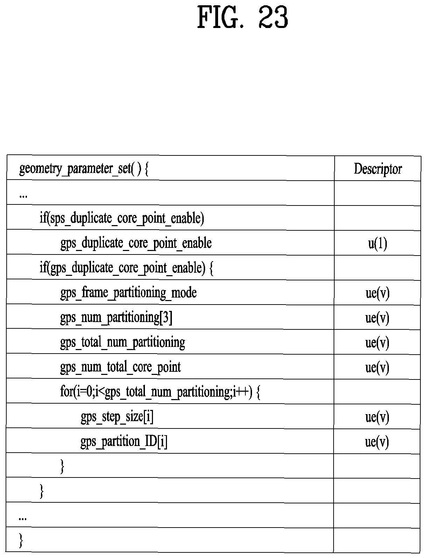

FIG. 23 illustrates a syntax structure of a GPS (geometry_parameter set ()) according to an embodiment of the present disclosure. The GPS according to the embodiments may contain information about a method of encoding geometry information about point cloud data contained in one or more slices.

The GPS according to the embodiments may contain geometry compression-related information. That is, the geometry compression-related information, including information about configuration of a core point list for allowing for position-adaptive duplicate information, may be added to and signaled in the GPS. When the value of the sps duplicate core_point enable field included in the SPS is TRUE, the geometry compression-related information may include a gps duplicate core_point enable field.

The gps duplicate core_point enable field may signal whether a core point list scheme that allows duplicate core points is applied to the core point list (or mapping point list) in coding geometry on a frame-by-frame basis. When the value of the gps duplicate core_point enable field is TRUE, it may indicate that duplicate core point elements are allowed. When the value is FALSE, it may indicate that duplicate core point elements are not allowed.

When the value of the gps duplicate core_point enable field is TRUE, the GPS may further include a gps_frame_partitioning_mode field, a gps_num_partitioning[3] field, a gps total_num_partitioning field, and a gps_num total core_point field.

When the value of the gps duplicate core_point enable field is TRUE, the gps_frame_partitioning_mode field may indicate configuration information for allowing duplicate information about a core point in a position-adaptive manner. The gps frame_partitioning_mode field may signal a partitioning mode to partition the point cloud frame into coding units (e.g., regions) to generate a core point list.

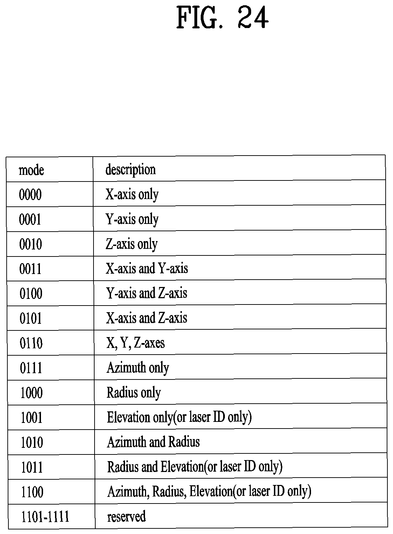

Each mode may be input as a value of one of the pieces of information in FIG. 24. FIG. 24 illustrates example partitioning modes indicating a method of partitioning point cloud data according to embodiments. According to embodiments, the information on the axis to be partitioned may vary depending on whether the coordinates are Cartesian coordinates or spherical coordinates. Further, for each coordinate, the information about each mode may vary depending on whether to partition based on a single axis among the three axes, to partition by combining two axes, or to partition all three axes.

For example, gps_frame_partitioning_mode equal to 0000 indicates that the point cloud frame is partitioned based on the X-axis. As another example, gps_frame_partitioning_mode equal to 1010 indicates that the point cloud frame is partitioned based on azimuth and radius.

gps_num_partitioning[3] may indicate the number of coding units (e.g., regions) to be partitioned for each of the partitioning reference axes determined by the value of gps_frame_partitioning_mode.

When the frame is partitioned into only three coding units based on a single axis, one of [3,0,0], [0,3,0], and [0,0,3] may be input. According to embodiments, the elements of the gps_num_partitioning[3] field may indicate, in order, the X, Y, and Z axes, respectively, for Cartesian coordinates, or may indicate the radius, azimuth, and elevation (or laserID) axes, respectively, for spherical coordinates. For example, when gps frame_partitioning_mode is 0000 and gps_num_partitioning is [3,0,0], they indicate that the number of coding units (e.g., regions) of the point cloud frame partitioned based on the X-axis is 3. As another example, when gps_frame_partitioning_mode is 1010 and gps_num_partitioning is [3,2,0], they indicate that the point cloud frame is partitioned into three coding units (e.g., regions) based on the radius and into two coding units (e.g., regions) based on the azimuth (or quantized azimuth).

The gps total_num_partitioning field may indicate the total number of partition units calculated based on the value of the gps_num_partition[3] field to select the core point position for each partition unit. For example, when gps_num_partitioning[3] = [3,2,0], the total number of partition units (e.g., regions) in the point cloud frame may be 6 with 3x2, excluding the value of 0.

The gps_num total core_point field may indicate a total core point list size for each frame in order to select a specific number of core points such that the core points are proportional to the number of points included in each partition unit.

The GPS according to embodiments may further include a gps_step_size[i] field and a gps_partition_ID[i] field according to the value of gps total_num_partitioning.

When the gps_num total core_point field has a value, and the core point selection for each partition unit is to select points at equally spaced positions, the gps_step_size[i] field may signal a step size for selection, wherein i may be as large as the maximum total number of partition units, and the value of gps_step_size may vary among the partition units. In other words, gps_step_size [i] indicates a step size for the i-th partition unit. For example, depending on the value of gps_step size [i], one point may be selected per every two points, every three points, or every four points in the i-th partition unit.

The gps_partition_ID[i] field may specify an ID of each partition unit, which may be assigned in an order predetermined in the system. The gps_partition_ID[i] field specifies the ID of the i-th partition unit.

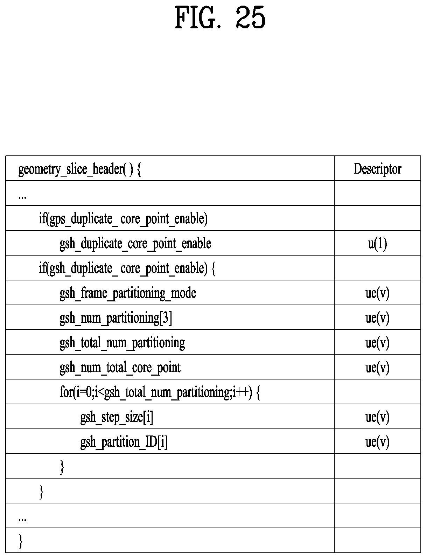

FIG. 25 illustrates an example syntax structure of a geometry slice header (geometry_slice_header()) according to embodiments. In the present disclosure, geometry_slice_header() may be referred to as a geometry data unit header (geometry_data_unit_header()). The geometry slice header (geometry_slice_header()) of FIG. 25 may include geometry compression-related information. That is, the geometry compression-related information including information about configuration of a core point list for allowing for position-adaptive duplicate information may be added to and signaled in the geometry slice header (also referred to as the geometry data unit header).

When the value of the gps_duplicate_core_point_enable field included in the GPS is TRUE, the geometry compression-related information may include a gsh duplicate core_point enable field.

The gsh duplicate core_point enable field may signal whether a core point list scheme that allows duplicate core points is applied to the core point list (or mapping point list) in coding geometry on a slice-by-slice basis. When the value of the gsh duplicate core_point enable field is TRUE, it may indicate that duplicate core point elements are allowed. When the value is FALSE, it may indicate that duplicate core point elements are not allowed.

When the value of the gsh_duplicate_core_point_enable field is TRUE, the geometry slice header may further include a gsh_frame_partitioning_mode field, a gsh_num_partitioning[3] field, a gsh total_num_partitioning field, and a gsh_num_total_core_point field.

When the value of the gsh duplicate core_point enable field is TRUE, the gsh frame_partitioning_mode field may indicate configuration information for allowing duplicate information about a core point in a position-adaptive manner. The gsh frame_partitioning_mode field may signal a partitioning mode to partition the point cloud slice into coding units to generate a core point list.

Each mode may be input as a value of one of the pieces of information in FIG. 24. FIG. 24 illustrates example partitioning modes indicating a method of partitioning point cloud data according to embodiments. According to embodiments, the information on the axis to be partitioned may vary depending on whether the coordinates are Cartesian coordinates or spherical coordinates. Further, for each coordinate, the information about each mode may vary depending on whether to partition based on a single axis among the three axes, to partition by combining two axes, or to partition all three axes.

For example, gsh frame_partitioning_mode equal to 0000 indicates that the point cloud slice is partitioned based on the X-axis. As another example, gsh frame_partitioning_mode equal to 1010 indicates that the point cloud slice is partitioned based on azimuth and radius.

gsh_num_partitioning[3] may indicate the number of coding units (e.g., regions) to be partitioned for each of the partitioning reference axes determined by the value of gsh_frame_partitioning_mode.

When the frame is partitioned into only three coding units based on a single axis, one of [3,0,0], [0,3,0], and [0,0,3] may be input. According to embodiments, the elements of the gsh_num_partitioning[3] field may indicate, in order, the X, Y, and Z axes, respectively, for Cartesian coordinates, or may indicate the radius, azimuth, and elevation (or laserID) axes, respectively, for spherical coordinates. For example, when gsh frame_partitioning_mode is 0000 and gsh_num_partitioning is [3,0,0], they indicate that the number of coding units (e.g., regions) of the point cloud slice partitioned based on the X-axis is 3. As another example, when gsh frame_partitioning_mode is 1010 and gsh_num_partitioning is [3,2,0], they indicate that the point cloud slice is partitioned into three coding units (e.g., regions) based on the radius and into two coding units (e.g., regions) based on the azimuth (or quantized azimuth).

The gsh total_num_partitioning field may indicate the total number of partition units calculated based on the value of the gsh_num_partition[3] field to select the core point position for each partition unit. For example, when gsh_num_partitioning[3] = [3,2,0], the total number of partition units (e.g., regions) in the point cloud slice may be 6 with 3x2, excluding the value of 0.

The gsh_num_total_core_point field may indicate a total core point list size for each slice (or frame) in order to select a specific number of core points such that the core points are proportional to the number of points included in each partition unit.

The geometry slice header according to embodiments may further include a gsh_step_size[i] field and a gsh_partition_ID[i] field according to the value of gsh_total_num_partitioning.

When the gsh_num total core_point field has a value, and the core point selection for each partition unit is to select points at equally spaced positions, the gsh_step_size[i] field may signal a step size for selection, wherein i may be as large as the maximum total number of partition units, and the value of gsh_step_size may vary among the partition units. In other words, gsh_step_size [i] indicates a step size for the i-th partition unit. For example, depending on the value of gsh_step_size [i], one point may be selected per every two points, every three points, or every four points in the i-th partition unit.

The gsh_partition_ID[i] field may specify an ID of each partition unit, which may be assigned in an order predetermined in the system. The gsh_partition_ID[i] field specifies the ID of the i-th partition unit.

FIG. 26 illustrates another example of a point cloud reception device according to embodiments. The elements of the point cloud reception device illustrated in FIG. 26 may be implemented by hardware, software, a processor, and/or a combination thereof.

According to embodiments, the point cloud data reception device may include a reception processor 61001, a signaling processor 61002, the geometry decoder 61003, an attribute decoder 61004, and a post-processor 61005.

The reception processor 61001 may receive one bitstream or may receive each of a geometry bitstream, an attribute bitstream, and a signaling bitstream. Upon receiving a file and/or a segment, the reception processor 61001 may decapsulate the received file and/or segment and output a bitstream therefor.

When receiving (or decapsulating) one bitstream, the reception processor 61001 may demultiplex a geometry bitstream, an attribute bitstream, and/or a signaling bitstream from one bitstream, output the demultiplexed signaling bitstream to the signaling processor 61002, output the geometry bitstream to the geometry decoder 61003, and output the attribute bitstream to the attribute decoder 61004.

When receiving (or decapsulating) a geometry bitstream, an attribute bitstream, and/or a signaling bitstream, the reception processor 61001 may deliver the signaling bitstream to the signaling processor 61002, deliver the geometry bitstream to the geometry decoder 61003, and deliver the attribute bitstream to the attribute decoder 61004.

The signaling processor 61002 may parse and process information included in signaling information, e.g., SPS, GPS, APS, TPS, and metadata in the input signaling bitstream and provide the parsed and processed information to the geometry decoder 61003, the attribute decoder 61004, and the post-processor 61005. According to another embodiment, signaling information included in the geometry slice (or data unit) header and/or the attribute slice (or data unit) header may be pre-parsed by the signaling processor 61002 prior to decoding of corresponding slice data.

According to embodiments, the signaling processor 61002 may also parse and process signaling information (e.g., geometry compression-related information) signaled in the SPS, the GPS and/or the geometry slice (or data unit) header and provide the parsed and processed information to the geometry decoder 61003.

According to embodiments, the geometry decoder 61003 may perform a reverse process to the operations of the geometry encoder 51003 of FIG. 16 based on signaling information (e.g., geometry compression-related information) for the compressed geometry bitstream to reconstruct geometry. The geometry information restored (or reconstructed) by the geometry decoder 61003 is provided to the attribute decoder 61004. The attribute decoder 61004 may restore an attribute by performing a reverse process of the attribute encoder 51004 of FIG. 16 based on signaling information and reconstructed geometry information for the compressed attribute bitstream.

According to embodiments, the post-processor 61005 may reconstruct point cloud data by matching geometry information (i.e., positions) restored and output from the geometry decoder 61003 with attribute information restored and output from the attribute decoder 61004 and display/render the matched information.

FIG. 27 illustrates an example of a geometry decoding process of the geometry decoder 61003 according to embodiments.

The elements (or blocks) shown in FIG. 27 may be implemented as hardware, software, a processor, and/or a combination thereof. In FIG. 27, the order of performing the elements may be changed, some elements may be omitted, and some elements may be newly added.

According to embodiments, once a bitstream is acquired by the reception processor 61001, the geometry compression-related information described with reference to FIGS. 22 to 25 may be acquired.

According to embodiments, the geometry decoder 61003 restores the geometry information by performing an inverse process to the operations of the geometry encoder of the transmission device.

That is, in operation 65001, entropy decoding is performed on the bitstream input through the reception processor 61001. Then, dequantization and/or inverse transformation may be further performed on the entropy-decoded bitstream.

Then, it is determined whether to apply intra-prediction to the geometry information contained in the entropy-decoded or dequantized/inversely transformed bitstream (operation 65002). Here, whether to apply intra-prediction may be provided by the transmitting side as geometry compression-related information (e.g., inter_prediction_enable) included in the signaling information, or may be preset.

When it is determined in operation 65002 that intra-prediction is applied, operation 65006 is executed to perform intra-frame prediction on the received geometry information.

When it is determined in operation 65002 that inter-prediction is applied, it is determined whether to allow duplicate information in the core point list (operation 65003). Here, whether to allow duplicate information may be determined based on geometry compression-related information signaled in at least one of the SPS, GPS, and/or geometry slice headers. For example, to partition a frame into multiple regions, the geometry compression-related information signaled in the SPS and GPS of FIGS. 22 to 25 may be referenced. To partition a slice into multiple regions, the geometry compression-related information signaled in the SPS, GPS, and geometry slice headers of FIGS. 22 to 25 may be referenced. According to embodiments, the geometry compression-related information may include at least one of information indicating whether duplicate information is allowed (sps duplicate core_point enable, and/or gps duplicate core_point enable, and/or gsh_duplicate_core_point_enable), information indicating a partitioning method (gps frame_partitioning_mode and/or gsh frame_partitioning_mode), information about the number of partitioned regions in a reference partition unit (gps_num_partitioning[3] and/or gsh_num_partitioning[3]), and information about the total number of partitioned regions per frame or slice (gps total_num_partitioning and/or gsh total_num_partitioning[3]), or the information about the number of core point lists per frame or slice (gps_num_total_core_point and/or gsh_num total core_point). According to embodiments, the information indicating whether duplicate information is allowed (sps duplicate core_point enable, and/or gps duplicate core_point enable, and/or gsh duplicate core_point enable) may be referred to as information indicating whether the point cloud data is partitioned. The geometry compression-related information may further include step size information per partition unit (gps_step_size[i] and/or gsh_step_size[i]) and identifier information for identifying each partition unit (gps_partition_ID[i] and/or gsh_partition_ID[i]) as much as the number of the information about the total number of partitioned regions per frame or slice (gps total_num_partitioning and/or gsh total_num_partitioning[3]).

When it is determined in operation 65003 that duplicate information is allowed, the frame or slice is partitioned into multiple units (e.g., regions) based on the geometry compression-related information signaled in at least one of the SPS, GPS, and/or geometry slice header, and a mapping point list is generated for each partitioned unit (operation 65004).

When it is determined in operation 65003 that duplicate information is allowed, inter-prediction is performed based on the mapping point list generated for each partition unit in operation 65004 (operation 65005).

When it is determined in operation 65003 that duplicate information is not allowed, inter-prediction is performed based on the mapping point list generated per frame or slice (operation 65005). In other words, when it is determined that duplicate information is not allowed, the frame (or slice) is not partitioned.

In operation 65007, reconstruction is performed on the geometry information inter-predicted in operation 65005 or the geometry information intra-frame predicted in operation 65006, and reconstructed points are output.

As described above, the geometry decoder 61003 of the reception device performs entropy decoding, dequantization, and inverse transformation on the geometry bitstream transmitted by the transmission device, and then determines, on a slice/frame basis, whether the slice/frame is for intra-frame prediction. When it is determined that the slice/frame is for intra-frame prediction, the conventional intra-frame prediction is performed to reconstruct the geometry information. When it is determined that the slice/frame is not for intra-frame prediction, it is determined whether duplicate information is allowed in the core point list. When the duplicate information is allowed, a partitioning method pre-input on the system is applied to partition the slice or frame into multiple units (e.g., regions). Then, after the partitioning into multiple units, a mapping point list is generated with the number of mapping points (or core points) to be generated in each partition unit determined by the geometry encoder 51003 of the transmission device, and inter-prediction is performed. In the case where duplicate information is not allowed, inter-prediction is performed by applying the existing inter-prediction method. After the inter-prediction is performed, the geometry information is reconstructed, and the corresponding points may be utilized for attribute decoding and rendering. In other words, in operation 65007, the geometry information (i.e., the positions of the final points) is reconstructed (or restored) based on the information predicted by the inter-prediction or intra-prediction and the residual included in the entropy-decoded geometry information. The reconstructed points may then be sent to the attribute decoder 61004 for use in predicting attribute information and/or to the renderer for rendering.

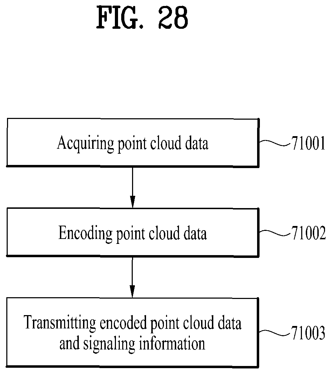

FIG. 28 is a flowchart illustrating a point cloud data transmission method according to embodiments.

The point cloud data transmission method according to the embodiments may include operation 71001 of acquiring point cloud data, operation 71002 of encoding the point cloud data, and operation 71003 of transmitting the encoded point cloud data and signaling information. In this case, a bitstream containing the encoded point cloud data and the signaling information may be encapsulated and transmitted as a file.

In operation 71001 of acquiring the point cloud data, some or all of the operations of the point cloud video acquisition unit 10001 of FIG. 1 may be performed, or some or all of the operations of the data input unit 12000 of FIG. 12 may be performed.

In operation 71002 of encoding the point cloud data, some or all of the operations of the point cloud video encoder 10002 of FIG. 1, the encoding 20001 of FIG. 2, the point cloud video encoder of FIG. 4, the point cloud video encoder of FIG. 12, the geometry encoder of FIG. 16, the geometry encoding process of FIG. 17 or FIG. 18, or the geometry encoding of FIG. 20 may be performed to encode the geometry information.

Operation 71002 of encoding the point cloud data according to the embodiments includes transforming and sorting coordinates of points in the input point cloud data, and then checking whether duplicate information is allowed in the mapping point list of the sorted point cloud data. When the duplicate information is allowed, the sorted point cloud data (e.g., slice or frame) is partitioned into multiple units (e.g., regions), one or more core points are selected in each unit, and one or more mapping point lists are generated based on the selected one or more points.

In each partitioned unit, the mapping point list may be generated by applying the first embodiment of FIG. 17 or the second embodiment of FIG. 18. For details of selecting one or more core points in each partitioned unit, generating one or more mapping point lists, and performing inter-prediction based on the generated one or more mapping point lists, which are omitted below, refer to the description of FIGS. 17 to 25 above. The compressed geometry information (e.g., residual information) about each of the points is entropy-encoded and output in the form of a geometry bitstream.

According to embodiments, operation 71002 of encoding the point cloud data includes compressing attribute information based on positions on which geometry encoding is not performed and/or the reconstructed geometry information. In one embodiment, the attribute information may be coded using any one or a combination of one or more of RAHT coding, LOD-based predictive transform coding, and lifting transform coding.

In the present disclosure, the signaling information may include geometry compression-related information. The geometry compression-related information may include core point list configuration information for allowing duplicate information. In one embodiment, the geometry compression-related information may be included in at least one of the SPS, GPS, or geometry slice header of FIGS. 22 to 25. A detailed description of the geometry compression-related information is provided above and will not be repeated herein.

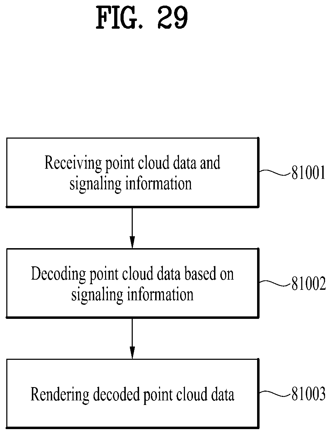

FIG. 29 is a flowchart illustrating a point cloud data reception method according to embodiments.

The point cloud data reception method according to the embodiments may include operation 81001 of receiving encoded point cloud data and signaling information, operation 81002 of decoding the point cloud data based on the signaling information, and operation 81003 of rendering the decoded point cloud data.

Operation 81001 of receiving the point cloud data and signaling information may be performed by the receiver 10005 of FIG. 1, the transmission 20002 or decoding 20003 of FIG. 2, or the receiver 13000 or reception processor 13001 of FIG. 13.

In operation 81002 of decoding the point cloud data, some or all of the operations of the point cloud video decoder 10006 of FIG. 1, the decoding 20003 of FIG. 2, the point cloud video decoder of FIG. 11, the point cloud video decoder of FIG. 13, the geometry decoder of FIG. 26, or the geometry decoding of FIG. 27 to decode the geometry information.

Operation 81002 of decoding the point cloud data according to the embodiments may include partitioning a slice or frame into multiple units (e.g., regions) based on geometry compression-related information included in the signaling information, generating one or more mapping point lists from each of the partitioned regions to perform inter-prediction, and decoding (i.e., reconstructing) the geometry information. For further details, refer to the description of FIGS. 16 to 28.

In operation 81002 of decoding the point cloud data, attribute information may be decoded (i.e., decompressed) based on the reconstructed geometry information. In one embodiment, the attribute information may be decoded using any one or a combination of one or more of RAHT coding, LOD-based predictive transform coding, and lifting transform coding.

In operation 81003 of rendering, point cloud data may be reconstructed based on the reconstructed (or restored) geometry information and attribute information and rendered according to various rendering methods. For example, points in the point cloud content may be rendered as a vertex having a certain thickness, a cube having a specific minimum size centered on the corresponding vertex position, or a circle centered on the corresponding vertex position. All or some regions of the rendered point cloud content is provided to the user through a display (e.g., a VR/AR display, a general display, etc.). Operation 81003 of rendering the point cloud data may be performed by the renderer 10007 of FIG. 1, the rendering 20004 of FIG. 2, or the renderer 13011 of FIG. 13.

As described above, according to the present disclosure, as a technique for inter-frame prediction of point cloud content, when predicting points, the residual information may be reduced by allowing some element information about the core points to be included in the core point list for prediction as duplicates, which may improve the prediction accuracy and reduce the bitstream size.

The aforementioned operation according to embodiments may be performed through components of the point cloud transmitting and reception device/method including a memory and/or a processor. The memory may store programs for processing/controlling operations according to embodiments. Each component of the point cloud transmitting and reception device/method according to embodiments may correspond to hardware, software, a processor, and/or a combination thereof. The processor may control the various operations described in the present disclosure. The processor may be referred to as a controller or the like. The operations according to embodiments may be performed by firmware, software, and/or a combination thereof and firmware, software, and/or a combination thereof may be stored in the processor or stored in the memory. In the present embodiment, the method of compressing geometry information of point cloud data has been described, but the methods described in the specification may be applied to attribute information compression and other compression methods.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "...module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/-reception device including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

Additionally, the operations according to the embodiments described in this document may be performed by transmitting and reception devices, each of which includes a memory and/or processor, depending on the embodiments. The memory may store programs for processing and controlling the operations according to the embodiments, and the processor may control various operations described in this document. The processor may be referred to as a controller or the like. The operations according to the embodiments may be implemented by firmware, software, and/or combinations thereof, and the firmware, software, and/or combinations thereof may be stored in the processor or memory.

[Mode for Disclosure]

The details have been specifically described in the best mode for the disclosure.

[Industrial Applicability]

It will be apparent to those skilled in the art that various modifications and variations are possible without departing from the spirit or scope of the embodiments. Thus, it is intended that the embodiments cover the modifications and variations of the embodiments provided they come within the appended claims and their equivalents.

**Claims**

1. A method of transmitting point cloud data, the method comprising:

   encoding the point cloud data including points; and
   transmitting the encoded point cloud data and signaling information,
   wherein the encoding of the point cloud data comprises:

      partitioning the point cloud data into a plurality of units;
      selecting one or more core points in each of the partitioned units;
      generating one or more core mapping lists based on the selected one or more core points; and
      inter-predicting and compressing the point cloud data based on the one or more core mapping lists.

2. The method of claim 1, wherein the point cloud data is frame-by-frame point cloud data or slice-by-slice point cloud data.

3. The method of claim 1, wherein the point cloud data is partitioned based on at least one of a laser ID, an azimuth, or a radius.

4. The method of claim 1, wherein a number of the one or more core points in each of the partitioned units depends on a ratio of a number of points included in each of the partitioned units to a total number of points included in the point cloud data.

5. The method of claim 1, wherein the signaling information comprises geometry compression-related information, and wherein the geometry compression-related information comprises at least one of:

      information indicating whether the point cloud data is partitioned;
      information indicating a method for the partitioning;
      information indicating a number of partitioned regions; or
      information indicating a number of core mapping lists.

6. A device for transmitting point cloud data, comprising:

   an encoder configured to encode the point cloud data including points; and
   a transmitter configured to transmit the encoded point cloud data and signaling information,
   wherein the encoder comprises:

      a partitioner configured to partition the point cloud data into a plurality of units;
      a core point selector configured to select one or more core points in each of the partitioned units;
      a core point list generator configured to generate one or more core mapping lists based on the selected one or more core points; and
      a predictor configured to inter-predict and compress the point cloud data based on the one or more core mapping lists.

7. The device of claim 6, wherein the point cloud data is frame-by-frame point cloud data or slice-by-slice point cloud data.

8. The device of claim 6, wherein the point cloud data is partitioned based on at least one of a laser ID, an azimuth, or a radius.

9. The device of claim 6, wherein a number of the one or more core points in each of the partitioned units depends on a ratio of a number of points included in each of the partitioned units to a total number of points included in the point cloud data.

10. The device of claim 6, wherein the signaling information comprises geometry compression-related information, and wherein the geometry compression-related information comprises at least one of:

information indicating whether the point cloud data is partitioned;
information indicating a method for the partitioning;
information indicating a number of partitioned regions; or
information indicating a number of core mapping lists.

11. A method of receiving point cloud data, the method comprising:

receiving the point cloud data and signaling information;
decoding the point cloud data based on the signaling information; and
rendering points included in the decoded point cloud data,
wherein the decoding of the point cloud data comprises:

partitioning the received point cloud data into a plurality of units based on the signaling information;
generating one or more core mapping lists for each of the partitioned units based on the signaling information; and
inter-predicting and decompressing the point cloud data based on the signaling information and the one or more core mapping lists.

12. The method of claim 11, wherein the point cloud data is frame-by-frame point cloud data or slice-by-slice point cloud data.

13. The method of claim 11, wherein the point cloud data is partitioned based on at least one of a laser ID, an azimuth, or a radius.

14. The method of claim 11, wherein the signaling information comprises geometry compression-related information, and wherein the geometry compression-related information comprises at least one of:

information indicating whether the point cloud data is partitioned;
information indicating a method for the partitioning;
information indicating a number of partitioned regions; or
information indicating a number of core mapping lists.

15. The method of claim 14, wherein the geometry compression-related information is contained in at least one of a sequence parameter set, a geometry parameter set, or a geometry slice header.

# FIG. 1

TRANSMISSION DEVICE

RECEPTION DEVICE

Point Cloud Video Acquisition

Renderer

Point Cloud Video Encoder

Point Cloud Video Decoder

Transmitter (Communication module)

(Compressed) Bitstream

Receiver (Communication module)

Feedback Information

# FIG. 2

EP 4 485 934 A1

# FIG. 3

# FIG. 4

positions                                    attributes

| 40000 | Transform coordinates |
| 40001 | Quantize and remove points (voxelize) |
| 40002 | Analyze octree |
| 40003 | Analyze surface approximation |
| 40004 | Arithmetic encode |

Reconstruct geometry — 40005

| 40006 | Transform colors |
| 40007 | Transfer attributes |
| 40008 | RAHT |
| 40009 | Generate LOD |
| 40010 | Lifting |
| 40011 | Quantize coefficients |
| 40012 | Arithmetic encode |

geometry bitstream                        attribute bitstream

# FIG. 5

# FIG. 6

# FIG. 7

4

16

2

1

32

8

y

z

x

4

2

1

8

$1 + 2 + 4 + 8 = 15$

FIG. 8

Level of details

# FIG. 9

P4  P3

P0  P1  P7

P6

P9

P5  P8  P2

Original order | P0, P1, P2, P3, P4, P5, P6, P7, P8, P9

LOD-based order | P0, P5, P4, P2 | P1, P6, P3 | P9, P8, P7

LOD0

LOD1

LOD2

# FIG. 10

# FIG. 11

geometry
bitstream

attribute
bitstream

| 11000 | Arithmetic decode |
| 11001 | Synthesize octree |
| 11002 | synthesize surface approximation |
| 11003 | Reconstruct geometry |
| 11004 | Inverse transform coordinates |

| Arithmetic decode | 11005 |
| Inverse quantize | 11006 |
| 11007 |
| RAHT | Generate LOD | 11008 |
| Inverse lifting | 11009 |
| Inverse transform colors | 11010 |

positions

attributes

# FIG. 12

# FIG. 13

Receive

↓

13000 — | Receiver |

↓

13001 — | Reception processor |

Geometry bitstream      Set value, etc.      Attribute bitstream

13006

13002 — | Arithmetic decoder | ← ─ ─ | Metadata parser | ─ ─ → | Arithmetic decoder | — 13007

↓          ↓

13003 — | Occupancy code-based octree reconstruction processor | ← ─ ─ ─ ─ ─ | Inverse quantization processor | — 13008

↓          ↓

13004 — | Surface model processor (triangle reconstruction, up-sampling, voxelization) | ← ─ ─ ─ ─ ─ | Prediction /lifting/RAHT inverse transform processor | — 13009

↓          ↓

13005 — | Inverse quantization processor | ← ─ ─ ─ ─ ─ | Color inverse transform processor | — 13010

Sharing reconstructed position values

↓

| Renderer | — 13011

↓

# FIG. 14

Home Appliance —17500

17600— AI Server

Smartphone —17400

17300
XR device

17000

Cloud Network
( 5G )

17100— Robot

HMD —17700

Self - Driving Vehicle —17200

# FIG. 15

Additional Inter Pred Point

50023

Inter Pred Point

Curr Point
50001

Prev Dec Point
50002

Ref Point with same scaled
azimuth and laserID

50022  50021

Reference Frame

Current Frame

# FIG. 16

# FIG. 17

Transforming of point cloud coordinate and sorting ~53001

Partitioning point cloud frame ~53002

Generating core point list ~53003

Performing inter prediction using core point list per partition unit ~53004

# FIG. 18

```
┌─────────────────────────────┐
│  Transforming of point cloud │ ⌒55001
│     coordinate and sorting   │
└─────────────────────────────┘
              │
              ▼
┌─────────────────────────────┐
│  Partitioning point cloud frame │ ⌒55002
└─────────────────────────────┘
              │
              ▼
┌─────────────────────────────┐
│  Determining core point list size │ ⌒55003
│    per point cloud partition unit │
└─────────────────────────────┘
              │
              ▼
┌─────────────────────────────┐
│      Selecting core point    │ ⌒55004
│        per partition unit    │
└─────────────────────────────┘
              │
              ▼
┌─────────────────────────────┐
│ Performing inter prediction using │ ⌒55005
│  core point list per partition unit │
└─────────────────────────────┘
```

# FIG. 19

56001      56002      56003

(a)

Core point list

| Core point Group 1 | Core point Group 2 | Core point Group 3 | ... | Core point Group N |

56001      56002      56003

(b)

# FIG. 20

Input data

isIntra? — 57001

y

n

Duplicate core_point Enable? — 57002

n

y

Partitioning — 57003

Calculate number of Core point for each unit — 57004

Generate mapping point list — 57005

57007 — Intra frame prediction

Inter prediction — 57006

Entropy coding — 57008

Output bitstream

# FIG. 21

EP 4 485 934 A1

| SPS | GPS | $APS_0$ | $APS_1$ | TPS | $Geom_0^0$ | $Attr_0^0$ | $Attr_1^0$ | $\cdots$ | $Geom_0^n$ | $Attr_0^n$ | $Attr_1^n$ |

slice 0

slice n

| Geom_slice_header | Geom_slice_data |

| Attr_slice_header | Attr_slice_data |

# FIG. 22

| seq_parameter_set_rbsp( ) { | Descriptor |
|---|---|
| ... | |
|     if(inter_prediction_enable) | |
|     sps_duplicate_core_point_enable | u(1) |
| ... | |
| } | |

# FIG. 23

| geometry_parameter_set( ) { | Descriptor |
|---|---|
| ... | |
| if(sps_duplicate_core_point_enable) | |
| gps_duplicate_core_point_enable | u(1) |
| if(gps_duplicate_core_point_enable) { | |
| gps_frame_partitioning_mode | ue(v) |
| gps_num_partitioning[3] | ue(v) |
| gps_total_num_partitioning | ue(v) |
| gps_num_total_core_point | ue(v) |
| for(i=0;i<gps_total_num_partitioning;i++) { | |
| gps_step_size[i] | ue(v) |
| gps_partition_ID[i] | ue(v) |
| } | |
| } | |
| ... | |
| } | |

# FIG. 24

| mode | description |
|------|-------------|
| 0000 | X-axis only |
| 0001 | Y-axis only |
| 0010 | Z-axis only |
| 0011 | X-axis and Y-axis |
| 0100 | Y-axis and Z-axis |
| 0101 | X-axis and Z-axis |
| 0110 | X, Y, Z-axes |
| 0111 | Azimuth only |
| 1000 | Radius only |
| 1001 | Elevation only(or laser ID only) |
| 1010 | Azimuth and Radius |
| 1011 | Radius and Elevation(or laser ID only) |
| 1100 | Azimuth, Radius, Elevation(or laser ID only) |
| 1101-1111 | reserved |

# FIG. 25

| geometry_slice_header( ) { | Descriptor |
|---|---|
| ... | |
| if(gps_duplicate_ core_point_enable) | |
| gsh_duplicate_core_point_enable | u(1) |
| if(gsh_duplicate_ core_point_enable) { | |
| gsh_frame_partitioning_mode | ue(v) |
| gsh_num_partitioning[3] | ue(v) |
| gsh_total_num_partitioning | ue(v) |
| gsh_num_total_core_point | ue(v) |
| for(i=0;i<gsh_total_num_partitioning;i++) { | |
| gsh_step_size[i] | ue(v) |
| gsh_partition_ID[i] | ue(v) |
| } | |
| } | |
| ... | |
| } | |

# FIG. 26

# FIG. 27

bitstream

↓

| Entropy decoding | 63001 |

↓

⟨IsIntra?⟩ — 63002

y →

n ↓

⟨Duplicate Core_point Enable?⟩ — 63003 — n

y ↓

| Generate mapping point list | 63004 |

↓

63006 — | Intra frame prediction |    | Inter prediction | — 63005

↓

| reconstruction | 63007

↓

Reconstructed point

# FIG. 28

| Acquiring point cloud data | ~71001 |

↓

| Encoding point cloud data | ~71002 |

↓

| Transmitting encoded point cloud data and signaling information | ~71003 |

# FIG. 29

```
┌─────────────────────────────┐
│  Receiving point cloud data and │ ⌐~81001
│     signaling information       │
└─────────────────────────────┘
              │
              ▼
┌─────────────────────────────┐
│  Decoding point cloud data based on │ ⌐~81002
│       signaling information         │
└─────────────────────────────┘
              │
              ▼
┌─────────────────────────────┐
│  Rendering decoded point cloud data │ ⌐~81003
└─────────────────────────────┘
```

## INTERNATIONAL SEARCH REPORT

| International application No. |
|---|
| **PCT/KR2023/001238** |

**A. CLASSIFICATION OF SUBJECT MATTER**

**H04N 19/54**(2014.01)i; **H04N 19/583**(2014.01)i; **H04N 19/597**(2014.01)i; **H04N 19/132**(2014.01)i; **H04N 19/70**(2014.01)i; **H04N 19/184**(2014.01)i

According to International Patent Classification (IPC) or to both national classification and IPC

**B. FIELDS SEARCHED**

Minimum documentation searched (classification system followed by classification symbols)

H04N 19/54(2014.01); G06K 9/62(2006.01); G06T 7/73(2017.01); G06T 9/00(2006.01); H04N 19/105(2014.01); H04N 19/46(2014.01); H04N 19/58(2014.01); H04N 19/597(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 분할(partitioning), 코어 포인트(core point), 매핑 (mapping), 리스트(list), 인터(inter), 예측(prediction)

**C. DOCUMENTS CONSIDERED TO BE RELEVANT**

| Category* | Citation of document, with indication, where appropriate, of the relevant passages | Relevant to claim No. |
|---|---|---|
| Y | WO 2021-140930 A1 (SONY GROUP CORPORATION) 15 July 2021.<br>See paragraphs [0027], [0075] and [0245]; claims 1 and 7; and figure 13. | 1-15 |
| Y | WO 2020-197086 A1 (LG ELECTRONICS INC.) 01 October 2020 (2020-10-01)<br>See paragraphs [0206] and [0451]; and claim 5. | 1-15 |
| Y | US 2021-0160537 A1 (AMIMON LTD.) 27 May 2021 (2021-05-27)<br>See paragraph [0043]. | 3,8,13 |
| A | CN 113034593 A (CN 113034593 A SHENZHEN GUANGNING INDUSTRIAL CO., LTD. et al.) 25 June 2021 (2021-06-25)<br>See paragraphs [0004]-[0015]; and claims 1-10. | 1-15 |
| A | US 2021-0218994 A1 (APPLE INC.) 15 July 2021 (2021-07-15)<br>See paragraphs [0004]-[0008]; and claims 1-10. | 1-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 May 2023** | **08 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

International application No.

**PCT/KR2023/001238**

| Patent document cited in search report | | | Publication date (day/month/year) | Patent family member(s) | | | Publication date (day/month/year) |
|---|---|---|---|---|---|---|---|
| WO | 2021-140930 | A1 | 15 July 2021 | CN | 114902284 | A | 12 August 2022 |
| | | | | EP | 4071715 | A1 | 12 October 2022 |
| | | | | KR | 10-2022-0122995 | A | 05 September 2022 |
| | | | | US | 2023-0023219 | A1 | 26 January 2023 |
| WO | 2020-197086 | A1 | 01 October 2020 | None | | | |
| US | 2021-0160537 | A1 | 27 May 2021 | US | 11140413 | B2 | 05 October 2021 |
| | | | | WO | 2019-069301 | A1 | 11 April 2019 |
| CN | 113034593 | A | 25 June 2021 | None | | | |
| US | 2021-0218994 | A1 | 15 July 2021 | US | 11475605 | B2 | 18 October 2022 |
| | | | | US | 2021-0217206 | A1 | 15 July 2021 |

Form PCT/ISA/210 (patent family annex) (July 2022)